(19) Europäisches Patentamt
European Patent Office
Office européen des brevets

(11) EP 4 796 578 A1

(12) **EUROPEAN PATENT APPLICATION**
published in accordance with Art. 153(4) EPC

(43) Date of publication:
**26.08.2026 Bulletin 2026/35**

(21) Application number: **24879650.0**

(22) Date of filing: **10.10.2024**

(51) International Patent Classification (IPC):
***C08J 9/28*** (2006.01) ***F16L 59/00*** (2006.01)
***H01M 10/658*** (2014.01)

(52) Cooperative Patent Classification (CPC):
**C08J 9/28; F16L 59/00; H01M 10/658;** Y02E 60/10

(86) International application number:
**PCT/JP2024/036341**

(87) International publication number:
**WO 2025/084225 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 JP 2023180030**
**18.12.2023 JP 2023213280**

(71) Applicant: **NICHIAS CORPORATION**
**Tokyo 104-8555 (JP)**

(72) Inventors:
- **KOBAYASHI Yuki**
**Tokyo 104-8555 (JP)**
- **SUZUKI Ritsu**
**Tokyo 104-8555 (JP)**

(74) Representative: **Grünecker Patent- und Rechtsanwälte**
**PartG mbB**
**Leopoldstraße 4**
**80802 München (DE)**

(54) **HEAT-INSULATING ELASTIC MEMBER, METHOD FOR MANUFACTURING HEAT-INSULATING ELASTIC MEMBER, AND SECONDARY BATTERY**

(57) Provided is an insulating elastic member having a single-layer structure to exhibit excellent insulation and elasticity, which contains an insulating material and elastic material in respective predetermined amounts, and can be produced at a high productivity.

The insulating elastic member comprises 15 to 75 mass% of heat-resistant particles and 15 to 75 mass% in total of one or more organic elastic particles selected from rubber particles and resin particles, the member having a porosity of 70 to 95% and a bulk density of 80 to 400 kg/m$^3$, and the member having a single-layer structure; or comprises 15 to 75 mass% of heat-resistant particles and 15 to 75 mass% in total of one or more organic elastic particles selected from rubber particles and resin particles, the member comprising an aggregate of a plurality of heat-resistant secondary particles including the organic elastic particles attached to the surface of the heat-resistant particle, wherein voids are formed between the heat-resistant secondary particles, and the member having a single-layer structure.

[Figure 1]

1
h
3 B
6
3
4
h
3 A
3
5
2

EP 4 796 578 A1

## Description

[Technical Field]

The present invention relates to an insulating elastic member, a method for producing an insulating elastic member, and a secondary battery.

[Background Art]

Conventionally, electric vehicles that are driven by an electric motor and hybrid vehicles that are driven by both an engine and an electric motor have been equipped with an electricity storage module (battery assembly) as drive source for the electric motor.

In the electricity storage module, a plurality of electricity storage elements (secondary battery cells) having positive and negative electrode terminals are arranged, and the electrode terminals of adjacent secondary battery cells are connected by a bus bar to form a secondary battery cell array in which a plurality of secondary battery cells are connected in series. A plurality of the secondary battery cell arrays are arranged on an as needed basis in view of output and others.

Incidentally, during operation of the electricity storage module, the battery pack or the like may be damaged due to overheating, for example, of the secondary battery cells that constitute the electricity storage module.

For example, since flammable organic electrolytes are used in lithium secondary batteries, an internal short circuit or the like may cause thermal runaway of a secondary battery cell, resulting in fire, smoke, or the like. In the case where fire, smoke, or the like occurs in one secondary battery cell of the battery pack, the heat conducted to the surrounding secondary battery cells may cause larger fires, smoking, explosions, etc.

It is conceivable to install an insulating material between adjacent secondary battery cells in order to suppress heat transfer to the surrounding area in case of fire, smoking, or the like from the secondary battery cells.

On the other hand, due to temperature rise of the secondary battery cells during charging or discharging, the sides of the secondary battery cells may expand. Therefore, the insulating material provided between the plurality of secondary battery cells described above is required to have elasticity, such that no breakage is caused when the secondary battery cells expand. As such an insulating material, for example, one having a multi-layer structure as described in Patent Literature 1 has been proposed.

[Citation List]

[Patent Literature]

[Patent Literature 1] Japanese Patent Laid-Open No. 2021-99940

[Summary of Invention]

[Technical Problem]

As an insulating material having the multi-layer structure, a multi-layer sheet including a first thermally conductive sheet/insulating sheet/rubber sheet/insulating sheet/first thermally conductive sheet laminated in the thickness direction is disclosed in Figure 4 in Patent Literature 1. It is believed that the insulating sheet provides insulating properties while the rubber sheet provides elasticity.

However, in the case where an insulating material (insulating elastic member) having a multi-layer structure with insulation and elasticity is produced, processes for adhering the layers to each other are required, which increases the number of production steps, resulting in difficulty in simplification of the production. Further, due to the large number of constituent layers (number of constituent materials), the production cost tends to increase.

In addition, the insulating elastic member having the multi-layer structure has a certain thickness due to its structure. In recent years, since a higher energy density in battery packs has been required more and more, the spacing between the secondary battery cells that constitute a battery pack tends to be reduced.

For these reasons, as the insulating elastic member having the multi-layer structure, ones having a reduced number of layers have been required.

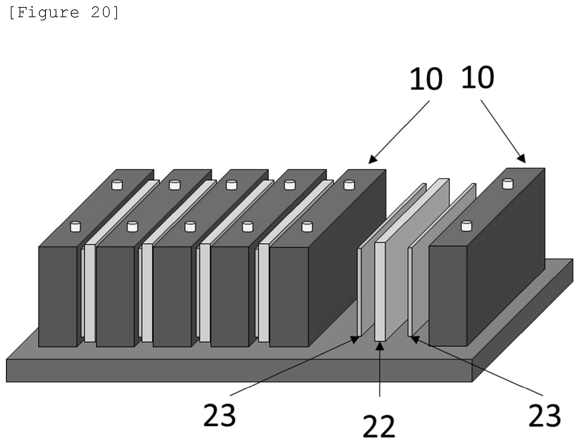

As such an insulating elastic member, an insulating elastic member disposed between secondary battery cells 10 and 10 as illustrated in Figure 20 is conceivable, which has a three-layer structure with a rubber sheet 23/insulating sheet 22/rubber sheet 23 laminated in the thickness direction.

Similarly, as an insulating elastic member disposed between secondary battery cells, an insulating elastic member having a two-layer structure with a rubber sheet/insulating sheet laminated in the thickness direction (an insulating elastic

member in which a rubber sheet 23 is placed only on one side of an insulating sheet 22 in an example shown in Figure 20) is conceivable.

As such an insulating elastic member with a reduced number of layers, one having a single-layer structure containing an insulating material and rubber material in a single layer to exhibit insulation and elasticity is ultimately required, instead of forming an insulating material and rubber material into sheets to be laminated.

However, through investigation by the inventors, it has been found that in the case where an insulating elastic member having the single-layer structure is produced by dehydrating and press-molding an aqueous dispersion containing an insulating material and an elastic material such as rubber in respective predetermined amounts, the resulting insulating elastic member exhibits insufficient insulation or elasticity, or has cracks or warpage to fail to produce a product having a desired shape.

Under these circumstances, an object of the present invention is to provide an insulating elastic member having a single-layer structure to exhibit excellent insulation and elasticity, which contains an insulating material and elastic material in respective predetermined amounts, and can be produced at high productivity, and also to provide a method for producing the insulating elastic member easily.

[Solution to Problem]

In order to achieve the object, the present inventors have conducted intensive research and have found that the technical problems are solved by: an insulating elastic member which comprises 15 to 75 mass% of heat-resistant particles and 15 to 75 mass% in total of one or more organic elastic particles selected from rubber particles and resin particles, has a porosity of 70 to 95% and a bulk density of 80 to 400 kg/m$^3$, and has a single-layer structure; or an insulating elastic member which comprises 15 to 75 mass% of heat-resistant particles and 15 to 75 mass% in total of one or more organic elastic particles selected from rubber particles and resin particles, includes an aggregate of a plurality of heat-resistant secondary particles including the organic elastic particles attached to the surface of the heat-resistant particle, has voids formed between the heat-resistant secondary particles, and has a single-layer structure. The present invention has been thus completed based on the findings.

Specifically, the present invention provides:

(1) An insulating elastic member comprising:

15 to 75 mass% of heat-resistant particles and 15 to 75 mass% in total of one or more organic elastic particles selected from rubber particles and resin particles,
the member having a porosity of 70 to 95% and a bulk density of 80 to 400 kg/m$^3$, and
the member having a single-layer structure.

(2) The insulating elastic member according to the item (1),
having a content of calcium components of more than 0 mass%, in terms of oxides, based on the total metal components, in terms of oxides, as measured by an X-ray fluorescent spectrometer.

(3) The insulating elastic member according to the item (1) or (2),
having a content of calcium components of 60 mass% or less, in terms of oxides, based on the total metal components, in terms of oxides, as measured by an X-ray fluorescent spectrometer.

(4) The insulating elastic member according to any one of the items (1) to (3),
comprising an aggregate of a plurality of heat-resistant secondary particles including the organic elastic particles attached to the surface of the heat-resistant particle, wherein voids are formed between the heat-resistant secondary particles.

(5) An insulating elastic member comprising:

15 to 75 mass% of heat-resistant particles and 15 to 75 mass% in total of one or more organic elastic particles selected from rubber particles and resin particles,
comprising an aggregate of a plurality of heat-resistant secondary particles including the organic elastic particles attached to the surface of the heat-resistant particle, wherein voids are formed between the heat-resistant secondary particles, and
the member having a single-layer structure.

(6) The insulating elastic member according to any one of the items (1) to (5), wherein the heat-resistant particles are calcium silicate particles or silica particles.

(7) The insulating elastic member according to any one of the items (1) to (6), further comprising 3 to 40 mass% in total of one or more reinforcing fibers selected from inorganic fibers and organic fibers.

(8) The insulating elastic member according to the item (7), comprising:

an aggregate of heat-resistant secondary particles and secondary fibers, wherein the heat-resistant secondary particles include the organic elastic particles attached to the surface of the heat-resistant particle, and the secondary fibers include the organic elastic particles attached to the surface of the reinforcing fiber, and wherein voids are formed between the heat-resistant secondary particles and the secondary fibers.

(9) The insulating elastic member according to any one of the items (1) to (8), further comprising 5 to 50 mass% of functional particles.
(10) The insulating elastic member according to any one of the items (1) to (9), further comprising more than 0 mass% and 3 mass% or less of a flocculant.
(11) The insulating elastic member according to any one of the items (1) to (10), wherein the insulating elastic member is disposed between adjacent secondary battery cells.
(12) A method for producing the insulating elastic member according to any one of the items (1) to (11), comprising:

mixing an aqueous dispersion containing heat-resistant particles with one or more organic elastic particles selected from rubber particles and resin particles, and then
dehydrating the mixture by gravity or suction.

(13) The method according to the item (12), wherein the heat-resistant particles are calcium silicate particles.
(14) The method according to the item (12) or (13), comprising mixing an aqueous dispersion containing heat-resistant particles with one or more organic elastic particles selected from rubber particles and resin particles, further mixing a resultant with a flocculant, and then dehydrating the mixture by gravity or suction.
(15) The method according to the item (12) or (13), comprising mixing an aqueous dispersion containing heat-resistant particles and one or more reinforcing fibers selected from inorganic fibers and organic fibers with one or more organic elastic particles selected from rubber particles and resin particles, and then dehydrating the mixture by gravity or suction.
(16) The method according to the item (12) or (13), comprising mixing an aqueous dispersion containing heat-resistant particles and one or more reinforcing fibers selected from inorganic fibers and organic fibers with one or more organic elastic particles selected from rubber particles and resin particles, further mixing a resultant mixture with a flocculant, and then dehydrating the mixture by gravity or suction.
(17) The method according to the item (12) or (13), comprising mixing an aqueous dispersion containing heat-resistant particles, one or more reinforcing fibers selected from inorganic fibers and organic fibers, and functional particles, with one or more organic elastic particles selected from rubber particles and resin particles, and then dehydrating the mixture by gravity or suction.
(18) The method according to the item (12) or (13), further comprising mixing an aqueous dispersion containing heat-resistant particles, one or more reinforcing fibers selected from inorganic fibers and organic fibers, and functional particles, with one or more organic elastic particles selected from rubber particles and resin particles, further mixing a resultant with a flocculant, and then dehydrating the mixture by gravity or suction.
(19) A secondary battery comprising the insulating elastic member according to any one of the items (1) to (11) disposed between adjacent secondary battery cells.

[Advantageous Effects of Invention]

According to the present invention, an insulating elastic member having a single-layer structure to exhibit excellent insulation and elasticity is provided, which contains an insulating material and elastic material in respective predetermined amounts, and can be produced at high productivity, and a method for producing the insulating elastic member easily is also provided. Thus the present invention leads to providing a secondary battery that allows heat conduction to adjacent secondary battery cells and damage to the secondary battery cell to be effectively suppressed.

[Brief Description of Drawings]

[Figure 1] Figure 1 is a schematic diagram showing an enlarged cross section of an insulating elastic member in an embodiment of the present invention.
[Figure 2] Figure 2 is a scanning electron microscope (SEM) image showing a cross section of an example of an insulating elastic member according to the present invention.

[Figure 3] Figure 3 is a scanning electron microscope (SEM) image showing a cross section of an example of an insulating elastic member according to the present invention.

[Figure 4] Figure 4 is a scanning electron microscope (SEM) image showing a partially enlarged cross section of the insulating elastic member shown in Figure 2.

[Figure 5] Figure 5 is a scanning electron microscope (SEM) image showing a partially enlarged cross section of the insulating elastic member shown in Figure 2.

[Figure 6] Figure 6 is a partially enlarged view schematically showing a state of an aqueous dispersion containing calcium silicate particles and organic elastic particles in the method for producing an insulating elastic member according to the present invention.

[Figure 7] Figure 7 is a partially enlarged view schematically showing a state of an aqueous dispersion containing calcium silicate particles and organic elastic particles in the method for producing an insulating elastic member according to the present invention.

[Figure 8] Figure 8 is a diagram showing a production flow in a production mode according to Comparative Example to the production method of the present invention.

[Figure 9] Figure 9 is a diagram showing a production flow in a production mode according to Example of the production method of the present invention.

[Figure 10] Figure 10 is a diagram showing a production flow in a production mode according to Example of the production method of the present invention.

[Figure 11] Figure 11 is a diagram showing a production flow in a production mode according to Example of the production method of the present invention.

[Figure 12] Figure 12 is a scanning electron microscope (SEM) image showing a partially enlarged cross section of an insulating elastic member in an Example of the present invention.

[Figure 13] Figure 13 is a scanning electron microscope (SEM) image showing a partially enlarged cross section of an insulating elastic member in an Example of the present invention.

[Figure 14] Figure 14 is a scanning electron microscope (SEM) image showing a partially enlarged cross section of an insulating elastic member in an Example of the present invention.

[Figure 15] Figure 15 is a scanning electron microscope (SEM) image showing a partially enlarged cross section of an insulating elastic member in an Example of the present invention.

[Figure 16] Figure 16 is X-ray CT images showing cross sections of the respective insulating elastic members in Examples of the present invention.

[Figure 17] Figure 17 is a scanning electron microscope (SEM) image showing a cross section of an insulating elastic member in Example of the present invention.

[Figure 18] Figure 18 is a diagram illustrating the compression/decompression test in Example of the present invention.

[Figure 19] Figure 19 is a diagram illustrating the compression/decompression test in Example of the present invention.

[Figure 20] Figure 20 is a schematic diagram showing an arrangement example of an insulating elastic member having a multi-layer structure as an object to be compared to the insulating elastic member according to the present invention.

[Description of Embodiments]

First, the insulating elastic member according to the present invention will be described.

The insulating elastic member according to the present invention comprises 15 to 75 mass% of heat-resistant particles and 15 to 75 mass% in total of one or more organic elastic particles selected from rubber particles and resin particles, and has a single-layer structure.

A preferred embodiment of the insulating elastic member according to the present invention includes an insulating elastic member which comprises 15 to 75 mass% of heat-resistant particles and 15 to 75 mass% in total of one or more organic elastic particles selected from rubber particles and resin particles, has a porosity of 70 to 95% and a bulk density of 80 to 400 kg/m$^3$, and has a single-layer structure.

Another preferred embodiment of the insulating elastic member according to the present invention includes an insulating elastic member which comprises 15 to 75 mass% of heat-resistant particles and 15 to 75 mass% in total of one or more organic elastic particles selected from rubber particles and resin particles, comprises an aggregate of a plurality of heat-resistant secondary particles including the organic elastic particles attached to the surface of the heat-resistant particle, wherein voids are formed between the heat-resistant secondary particles, and has a single-layer structure.

A further preferred embodiment of the insulating elastic member according to the present invention includes an insulating elastic member which comprises 15 to 75 mass% of heat-resistant particles and 15 to 75 mass% in total of one or more organic elastic particles selected from rubber particles and resin particles, comprises an aggregate of a plurality of heat-resistant secondary particles including the organic elastic particles attached to the surface of the heat-resistant

particle, wherein voids are formed between the heat-resistant secondary particles, has a porosity of 70 to 95% and a bulk density of 80 to 400 kg/$m^3$, and has a single-layer structure.

The insulating elastic member according to the present invention will be described below with reference to the drawings appropriately.

The insulating elastic member of the present invention contains heat-resistant particles.

In the insulating elastic member according to the present invention, examples of the heat-resistant particles include one or more inorganic particles selected from silica particles, magnesium particles, titanium particles, alumina particles, calcium silicate particles, etc., and a particulate matter having heat resistance such as organic particles. In particular, calcium silicate particles or silica particles are preferred.

In the case where the heat-resistant particles are calcium silicate particles in the insulating elastic member according to the present invention, examples of the calcium silicate particles include ones entirely composed of calcium silicate.

Specific examples of the calcium silicate particles entirely composed of calcium silicate include one or more selected from particles of crystalline calcium silicate such as xonotlite and tobermorite, and particles of amorphous calcium silicate such as calcium silicate hydrate (C-S-H gel).

Xonotlite is a fibrous crystalline calcium silicate represented by $Ca_6(Si_6O_{17})(OH)_2$, and tobermorite is a rectangular crystalline calcium silicate represented by $Ca_5(Si_6O_{18}H_2)(4H_2O)$.

When the calcium silicate particles are made of crystalline calcium silicate such as xonotlite or tobermorite, the insulating elastic member according to the present invention exhibits excellent heat resistance and can exhibit high shape retentionability easily.

Also, in the case where the calcium silicate particles are made of crystalline calcium silicate having crystallization water, such as xonotlite and tobermorite, the crystallization water can be released to absorb heat even in case of, for example, thermal runaway of a secondary battery cell when in use of the insulating elastic member according to the present invention as an insulating elastic member disposed between neighboring secondary battery cells, and thus, the thermal conduction to the surrounding secondary battery cells can be easily suppressed.

Calcium silicate hydrate is an amorphous calcium silicate called $CaO$-$SiO_2$-$H_2O$ gel (C-S-H gel), in which calcium oxide, silicon dioxide, water, etc. are combined in various ratios.

In the case where the calcium silicate particles are made of C-S-H gel, which contains a large amount of hydrated water, the hydrated water can be released to absorb heat even in case of, for example, thermal runaway of the secondary battery cell when in use of the insulating elastic member according to the present invention as an insulating elastic member disposed between neighboring secondary battery cells, and thus, the thermal conduction to the surrounding secondary battery cells can be highly suppressed.

In the insulating elastic member according to the present invention, examples of the calcium silicate particles include ones having base particles (inorganic particles, organic particles, or particles containing both inorganic and organic components) with calcium silicate on at least a part of the outer surface thereof (the outer surface of base particles is coated or modified with calcium silicate).

In the case where the calcium silicate particles have calcium silicate on at least a part of the outer surface of the base particles, the base particles may or may not contain a calcium component.

Specific examples of the calcium silicate particles having calcium silicate at least in a part of the outer surface of base particles include particles coated with calcium silicate hydrate (C-S-H gel).

The particles coated with calcium silicate hydrate (C-S-H gel) are not particularly limited as long as at least a part of the outer surface of base particles (inorganic particles, organic particles, or particles containing both inorganic and organic components) is coated with calcium silicate hydrate (C-S-H gel). Examples thereof include wet silica particles coated with calcium silicate hydrate (C-S-H gel), i.e., wet silica particles having an outer surface coated with calcium silicate hydrate (C-S-H gel), and inorganic particles such as magnesium particles or titanium particles coated or modified with calcium silicate hydrate (C-S-H gel).

The wet silica particles coated with calcium silicate hydrate (C-S-H gel) are wet silica particles of which outer surface is coated with C-S-H gel.

The wet silica particles are made of amorphous silicon dioxide synthesized in a liquid, and those with different characteristics depending on the synthesis conditions are known, which are referred to as precipitated silica, gel silica (silica gel), colloidal silica, etc. It is known that the wet silica particles are dissolved in water even at normal temperature, and the dissolution into water is promoted with increase in pH.

The wet silica particles coated with C-S-H gel may be produced, for example, by stirring wet silica particles in a saturated aqueous solution of hydrated lime at normal temperature. This method promotes dissolution of silica ($SiO_2$) components on the surface of the wet silica particles, and the dissolved components react with calcium ions already present in the aqueous solution to form C-S-H gel ($CaO$-$SiO_2$-$H_2O$ gel) on the surface of the wet silica.

The method for producing the wet silica particles coated with C-S-H gel is not limited to the above method, as long as the outer surface of the wet silica particles can be coated or modified with the C-S-H gel.

In the case where the calcium silicate particles are wet silica particles coated with C-S-H gel, which covers the surface and contains a large amount of hydrated water, the hydrated water can be released to absorb heat even in case of, for example, thermal runaway of the secondary battery cell when in use of the insulating elastic member according to the present invention as an insulating elastic member disposed between neighboring secondary battery cells, and thus the thermal conduction to the surrounding secondary battery cells can be highly suppressed.

Further, in the case where the calcium silicate particles are wet silica particles coated with C-S-H gel, the core particles are made of wet silica, so that the insulating elastic member according to the present invention can exhibit high shape retentionability easily.

The insulating elastic member according to the present invention preferably has a content of calcium components of more than 0 mass%, more preferably 0.2 mass% or more, and still more preferably 0.8 mass% or more, in terms of oxide, based on the total metal components, in terms of oxides, as measured by the fluorescence X-ray spectrometer.

The insulating elastic member according to the present invention preferably has a content of calcium components of 60 mass% or less, more preferably 50 mass% or less, and still more preferably 40 mass% or less, in terms of oxide, based on the total metal components, in terms of oxides, as measured by the fluorescence X-ray spectrometer.

In the present application document, the calcium components (calcium components that compose calcium silicate hydrate (C-S-H gel) and calcium silicate particles) in the insulating elastic material may be identified by confirming that the numerical value for CaO exceeds 0 (zero)% using a wavelength-dispersive X-ray fluorescence spectrometer (ZSX Primus II, manufactured by Rigaku Corporation).

In the case where the heat-resistant particles in the insulating elastic member according to the present invention are made of silica particles, examples of the silica particles include wet silica particles, and the details thereof are as described above.

In the insulating elastic member according to the present invention, the heat-resistant particles preferably have an organic bonding group on the surface.

The organic bonding group provided on the surface of the heat-resistant particles has preferably 1 to 100 carbon atoms, more preferably 2 to 50 carbon atoms, and still more preferably 4 to 25 carbon atoms.

Specific examples of the organic bonding group provided on the surface of the heat-resistant particles include one or more selected from the group consisting of a vinyl group, an epoxy group, a styrene group, a methacrylic group, an acrylic group, an amino group, a ureido group, a mercapto group, and an isocyanate group.

In the insulating elastic member according to the present invention, examples of the heat-resistant particles having an organic bonding group on the surface include silica particles having an organic bonding group on the surface.

Examples of the silica particles having an organic bonding group on the surface include condensation reaction products obtained by stirring and mixing a silane coupling agent having hydroxyl groups (silanol groups) and organic bonding groups on the surface with wet silica in water, such that the hydroxyl groups (silanol groups) on the surface of the silane coupling agent and the hydroxyl groups (silanol groups) on the surface of the wet silica are hydrolyzed and condensed.

In the insulating elastic member according to the present invention, when the heat-resistant particles have organic bonding groups on the surface, the bonding properties between the heat-resistant particles and one or more organic elastic particles selected from the group consisting of rubber particles and resin particles (described below) are improved, so that the compression resistance of the insulating elastic member can be improved easily.

In the insulating elastic member according to the present invention, the average particle size of the heat-resistant particles is preferably 0.01 to 100.00 mm, more preferably 0.10 to 80.00 mm, and even more preferably 1.00 to 50.00 mm.

In the present application document, the average particle size of the heat-resistant particles means the particle size at 50% of the cumulative particle size (median diameter (D50)) in the volume cumulative particle size distribution in measurement by laser diffraction/scattering using a laser diffraction particle size distribution analyzer Sync&Image (measurement range: 0.02 to 2000 mm) manufactured by MicrotracBEL Corp.

The insulating elastic member according to the present invention contains heat-resistant particles in an amount of 15 to 75 mass%, preferably 30 to 70 mass%, and more preferably 40 to 60 mass%.

The insulating elastic member of the present invention contains heat-resistant particles in the above-described amount, so that excellent insulating properties can be easily exhibited.

The insulating elastic member according to the present invention contains one or more organic elastic particles selected from the group consisting of rubber particles and resin particles.

In the insulating elastic member according to the present invention, examples of the rubber component constituting the rubber particles include one or more selected from butadiene, chloroprene, a styrene-butadiene copolymer, a carboxyl group-modified styrene-butadiene copolymer, a butyl rubber, an acrylonitrile-butadiene copolymer, a carboxy-modified acrylonitrile-butadiene rubber, a methyl methacrylate-butadiene copolymer, an ethylene-propylene copolymer, a silicone rubber, and a copolymer rubber, hybrid rubber or modified rubber thereof.

The rubber component constituting the rubber particles preferably contains a crosslinking agent in view of ensuring sufficient crosslinking of the rubber and improving the strength of the elastic body.

In the case where the rubber component constituting the rubber particles has self-crosslinking properties, no crosslinking agent may be contained. However, containing a crosslinking agent can further improve the strength of the insulating elastic member of the present invention.

In the insulating elastic member according to the present invention, examples of the resin component constituting the resin particles include one or more selected from a silicone resin, an acrylic resin, a carboxy-modified acrylic resin, a phenol resin, a polyurethane resin, a polypropylene resin, a vinyl acetate resin, a silicone resin, an acrylic resin, a urethane resin, an epoxy resin, a phenol resin, an alkyd resin, a polyester resin, a vinyl chloride resin, a vinylidene chloride resin, a polypropylene resin, a vinyl acetate resin, and a copolymer resin, hybrid resin or modified resin thereof.

The resin component constituting the resin particles preferably contains a crosslinking agent in view of ensuring sufficient crosslinking of the resin and improving the strength of the elastic body.

In the case where the resin component constituting the resin particles has self-crosslinking properties, no crosslinking agent may be contained. However, containing the crosslinking agent can further improve the strength of the insulating elastic member according to the present invention.

Since the insulating elastic member according to the present invention contains one or more organic elastic particles selected from rubber particles and resin particles, excellent elasticity can be easily exhibited.

In the insulating elastic member according to the present invention, the organic elastic particles have an average particle size of preferably 0.10 to 100.00 mm, more preferably 0.10 to 10.00 mm, and still more preferably 0.10 to 1.00 mm.

In the present application document, the average particle size of the organic elastic particles refers to a particle size at 50% of the cumulative particle size (median diameter (D50)) in the volume cumulative particle size distribution in measurement by laser diffraction/scattering using a laser diffraction particle size distribution analyzer Sync&Image (measurement range: 0.02 to 2000 mm) manufactured by MicrotracBEL Corp.

The insulating elastic member according to the present invention contains one or more organic elastic particles selected from rubber particles and resin particles in a total amount of 15 to 75 mass%, preferably 20 to 75 mass%, and more preferably 30 to 70 mass%.

The insulating elastic member according to the present invention, which has a total content of one or more organic elastic particles selected from rubber particles and resin particles in the above-described range, can easily exhibit excellent elasticity.

It is preferable that the insulating elastic member according to the present invention contain one or more reinforcing fibers selected from inorganic fibers and organic fibers.

In the insulating elastic member according to the present invention, examples of the inorganic fibers include one or more selected from ceramic-based fibers such as silica fibers, alumina fibers, alumina silicate fibers, zirconia fibers, inorganic fiber-containing biosoluble fibers, refractory ceramic fibers, magnesium silicate fibers, alkaline earth silicate fibers and potassium titanate fibers; glass-based fibers such as glass fibers and glass wool; mineral-based fibers such as rock wool, basalt fibers and wollastonite; inorganic fiber-containing flame-retardant fibers; and carbon fibers.

In the insulating elastic member according to the present invention, examples of the organic fibers include one or more selected from synthetic fibers, natural fibers, pulp fibers (including cellulose nanofibers and cellulose microfibers).

Examples of the synthetic fibers include one or more fibers made of thermosetting resin or made of thermoplastic resin, such as one or more selected from modified polyethylene terephthalate fibers, polyethylene fibers, polypropylene fibers, polyester fibers, nylon fibers, polybutylene terephthalate fibers, polyvinyl alcohol fibers, polyurethane fibers, ethylene-vinyl alcohol copolymer fibers, polytrimethylene terephthalate fibers, polyacetal fibers, polytetrafluoroethylene fibers, polyether ether ketone fibers, polyphenylene sulfide fibers, polyamide fibers, and polyparaphenyl phthalamide fibers.

In the insulating elastic member according to the present invention, the reinforcing fibers have an average length of preferably 0.1 to 10.0 mm, more preferably 0.1 to 5.0 mm, and still more preferably 0.1 to 3.0 mm.

The average length of the reinforcing fibers means the arithmetic mean value when the lengths of 100 reinforcing fibers are measured using a digital microscope VHX-8000 manufactured by Keyence Corporation.

The insulating elastic member according to the present invention contains one or more reinforcing fibers selected from inorganic fibers and organic fibers in a total amount of preferably 3 to 40 mass%, more preferably 3 to 30 mass%, and still more preferably 3 to 20 mass%.

When the insulating elastic member of the present invention contains one or more reinforcing fibers selected from inorganic fibers and organic fibers within the above-described range in total, the insulating elastic member according to the present invention can easily exhibit desired shape retentionability.

It is preferable that the insulating elastic member according to the present invention contain functional particles.

In the insulating elastic member according to the present invention, examples of the functional particles include one or more selected from the group consisting of radiation scattering materials, heat absorbing materials, and heat storage materials.

In the case where the functional particles are radiation scattering materials, the radiation scattering materials are not particularly limited as long as heat transfer by radiation can be reduced, and examples thereof include one or more

selected from silicon carbide, silicon nitride, titania, zirconia, zirconium silicate (zircon), carbon, iron oxide, chromium oxide, zinc sulfide, and barium titanate.

When the insulating elastic member according to the present invention contains a radiation scattering material as functional particles, heat transfer by radiation can be effectively reduced.

The insulating elastic member according to the present invention contains functional particles in an amount of, preferably 5 to 50 mass%, more preferably 5 to 40 mass%, and still more preferably 5 to 30 mass%.

When the insulating elastic member according to the present invention contains functional particles within the above-described range, the insulating elastic member according to the present invention can easily exhibit desired functionality.

It is preferable that the insulating elastic member according to the present invention contain a flocculant.

In the insulating elastic member according to the present invention, the flocculant is preferably a polymer flocculant.

Examples of the polymer flocculant include one or more selected from a cationic polymer flocculant, an anionic polymer flocculant, and an amphoteric polymer flocculant, and a cationic polymer flocculant or an anionic polymer flocculant is preferred.

Examples of the cationic polymer flocculant include one or more selected from water-soluble aniline resin hydrochloride, polythiourea hydrochloride, poly(vinylbenzyl trimethylammonium chloride), chitosan, and polyethylene amine.

Examples of the anionic polymer flocculant include one or more selected from sodium polyacrylate, dimethyl aminoethyl polyacrylate, polyacrylic acid amide (polyacrylamide), a partial hydrolyzate of polyacrylic acid amide, a sulfonated polyacrylamide derivative, sodium polystyrene sulfonate, and a maleic acid polymer.

It is preferable that the anionic polymer flocculants have a molecular weight of 100000 or more.

The insulating elastic member according to the present invention contains a flocculant in an amount of, preferably more than 0 mass% and 3 mass% or less, more preferably more than 0 mass% and 2 mass% or less, and still more preferably more than 0 mass% and 1 mass% or less.

In the insulating elastic member according to the present invention, the flocculant is used to flocculate the components for constituting the insulating elastic member in the production process of the insulating elastic member.

When the insulating elastic member according to the present invention includes the flocculant, the components including heat-resistant particles are suitably flocculated, so that the insulating elastic member can easily exhibit excellent shape retentionability.

It is preferable that the insulating elastic member according to the present invention include an aggregate of a plurality of heat-resistant secondary particles including the organic elastic particles attached to the surface of the heat-resistant particle, wherein voids are formed between the heat-resistant secondary particles.

Also, in the case where the insulating elastic member according to the present invention has reinforcing fibers together with the heat-resistant particles and the organic elastic particles, it is preferable that the insulating elastic member according to the present invention comprise an aggregate of heat-resistant secondary particles and secondary fibers, wherein the heat-resistant secondary particles include the organic elastic particles attached to the surface of the heat-resistant particles and the secondary fibers include the organic elastic particles attached to the surface of the reinforcing fiber, and wherein voids are formed between the heat-resistant secondary particles and the secondary fibers.

Examples of the insulating elastic member according to the present invention include one including calcium silicate particles as the heat-resistant particles and calcium silicate secondary particles as the heat-resistant secondary particles, and one including silica particles as the heat-resistant particles and silica secondary particles as the heat-resistant secondary particles.

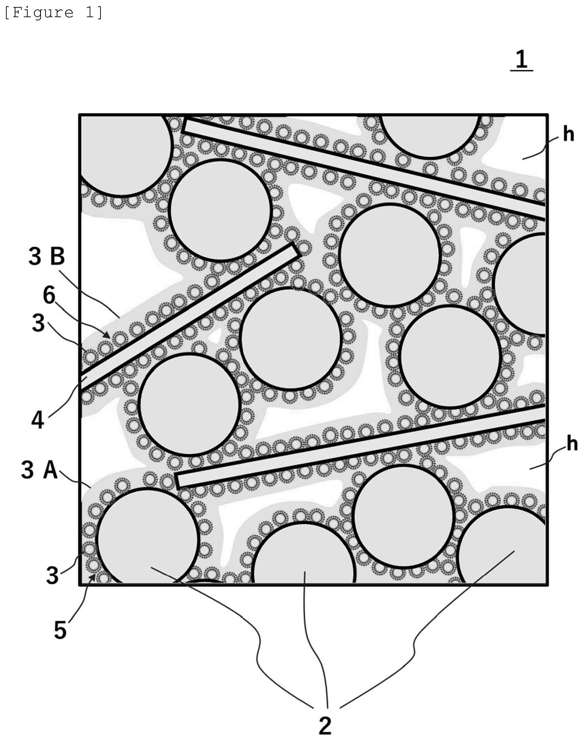

Figure 1 is a schematic diagram showing an enlarged cross section of an insulating elastic member in an embodiment of the present invention.

The insulating elastic member 1 illustrated in Figure 1 is composed of an aggregate including a plurality of calcium silicate secondary particles 5 having organic elastic particles 3 attached to the surface of a calcium silicate particle 2 to form an organic elastic particle layer 3A, and a plurality of secondary fibers 6 having organic elastic particles 3 attached to the surface of a reinforcing fiber 4 to form an organic elastic particle layer 3B.

As shown in Figure 1, a plurality of voids h are formed between the calcium silicate secondary particles 5 and the secondary fibers 6, in the insulating elastic member 1.

Although not shown in the drawing, the voids h may be formed between a plurality of flocculated calcium silicate secondary particles 5, or the voids h may be formed between a plurality of flocculated secondary fibers 6, in the insulating elastic member 1 shown in Figure 1.

The insulating elastic member 1 shown in Figure 1 has the reinforcing fibers 4 together with the calcium silicate particles 2 and the organic elastic particles 3. In the case where the insulating elastic member according to the present invention has no reinforcing fibers, the voids h are formed only between the calcium silicate secondary particles 5 in Figure 1.

Figure 1 illustrates the case where the heat-resistant particles are calcium silicate particles 2. In the figure, the calcium silicate particles 2 may be other heat-resistant particles such as silica particles.

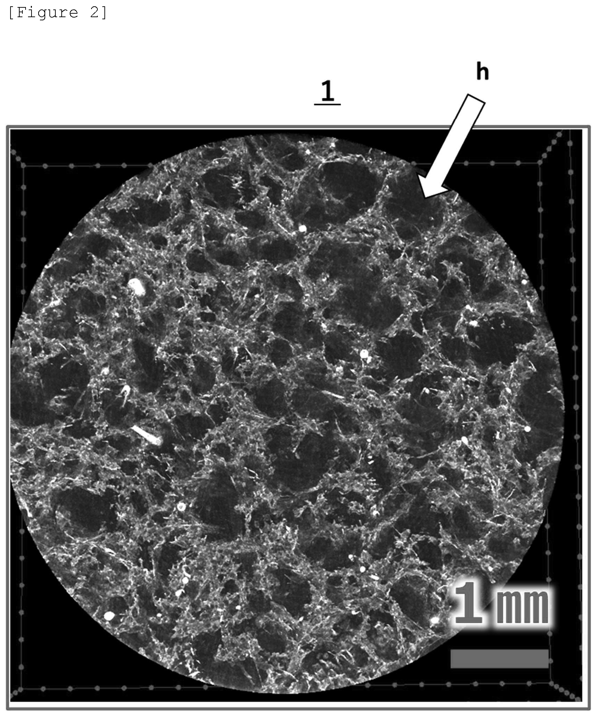

Figure 2 shows a scanning electron microscope (SEM) image of a cross section of an example of an insulating elastic member according to the present invention.

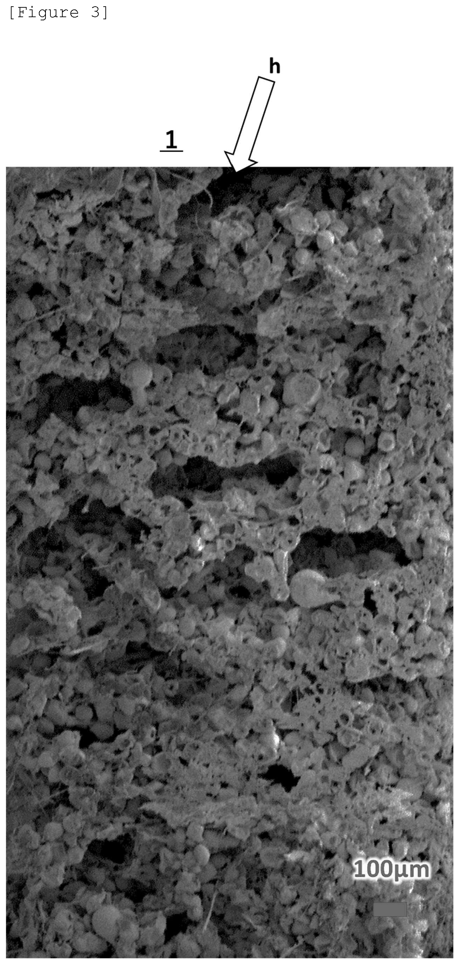

Figure 3 also shows a scanning electron microscope (SEM) image of a cross section of an example of an insulating elastic member according to the present invention, and is a cross-sectional image observed at a higher magnification than in Figure 2.

The insulating elastic member 1 illustrated in Figures 2 and 3 includes an aggregate of a plurality of calcium silicate secondary particles having organic elastic particles attached to the surface of a calcium silicate particle, and a plurality of secondary fibers having organic elastic particles attached to the surface of a reinforcing fiber.

As illustrated in Figures 2 and 3, it can be seen that the insulating elastic member of the present invention has a porous form with a plurality of black voids h (indicated by outlined arrows in the drawings) formed between a plurality of calcium silicate secondary particles, between the calcium silicate secondary particle and the secondary fiber, and between a plurality of secondary fibers.

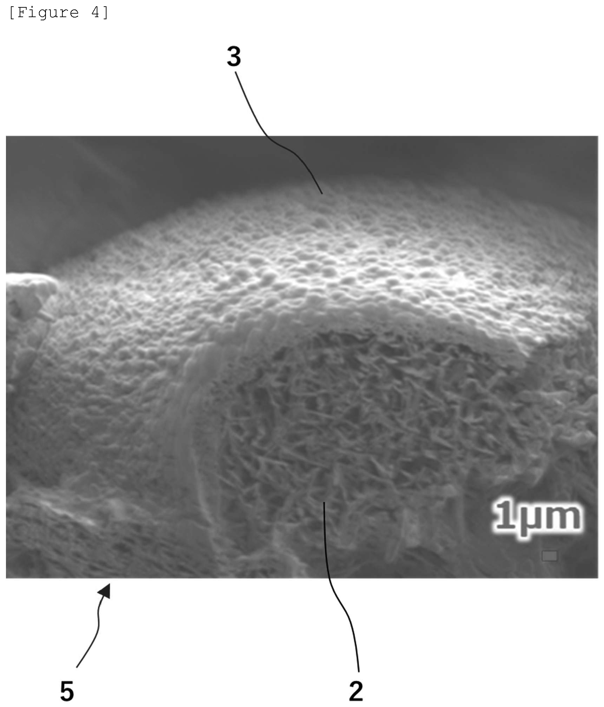

Figure 4 is a scanning electron microscope (SEM) image showing a partially further enlarged cross section of the insulating elastic member 1 shown in Figure 3.

As shown in Figure 4, it can be seen that the insulating elastic member 1 shown in Figure 3 comprises calcium silicate secondary particles 5 having organic elastic particles 3 attached to the surface of calcium silicate particle 2.

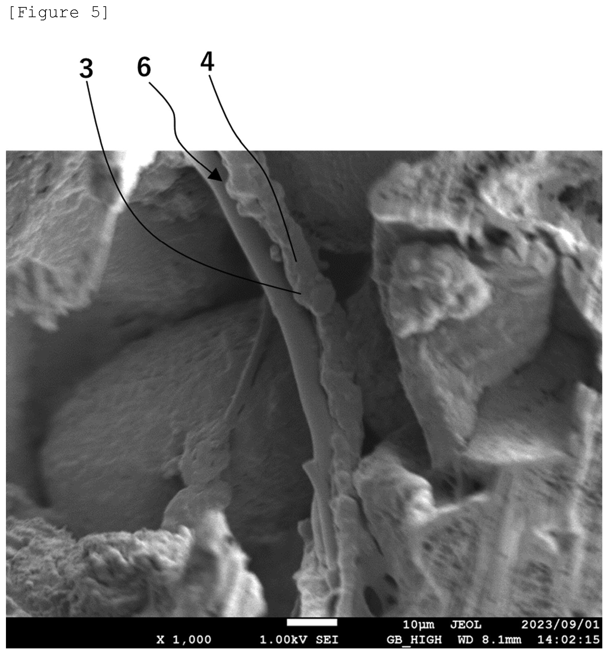

Figure 5 is also a scanning electron microscope (SEM) image showing a partially further enlarged cross section of the insulating elastic member shown in Figure 3.

As shown in Figure 5, it can be seen that the insulating elastic member of an exemplary embodiment shown in Figure 3 includes secondary fibers 6 having organic elastic particles 3 attached to the surface of reinforcing fiber 4.

When the insulating elastic member of the present invention has a porous form with a plurality of black voids h (indicated by an outlined arrow in Figure 2 and Figure 3) formed between a plurality of calcium silicate secondary particles (heat-resistant secondary particles) and between the calcium silicate secondary particles (heat-resistant secondary particles) and secondary fibers as shown in Figure 1 to Figure 3, excellent insulating properties and elasticity can be easily exhibited.

In the present application document, the scanning electron microscope (SEM) image showing the internal structure of the insulating elastic member according to the present invention was obtained through observation of the cross section of the insulating elastic member sample obtained using a cross section polisher (CP polishing) SM-09020CP manufactured by JEOL Ltd., by using a field emission-type scanning electron microscope manufactured by JEOL Ltd., which is a scanning electron microscope energy dispersive X-ray spectrometer (SEM-EDX).

The insulating elastic member according to the present invention has a porosity of preferably 70 to 95%, more preferably 75 to 95%, and still more preferably 80 to 95%.

In the present application document, the porosity means a value calculated by the following method.

(1) The true density (kg/m$^3$) of the insulating elastic member as a measurement sample is measured by the pycnometer method specified in JIS K 0061.
(2) According to the provisions of JIS A5430 (calcium silicate board type 2), the mass of the measurement sample is measured using an electronic balance, and the dimensions of the measurement sample are measured using a vernier caliper and a micrometer. Based on the resulting values, the bulk density (kg/m$^3$) of the measurement sample is calculated.
(3) The porosity (%) is calculated from the true density (kg/m$^3$) and bulk density (kg/m$^3$) of the measurement sample obtained in the above (1) and (2), according to the following formula:

$$\text{Porosity (\%)}=\{(\text{True density}-\text{Bulk density})/\text{True density}\}\times 100$$

The insulating elastic member according to the present invention has a bulk density of preferably 80 to 400 kg/m$^3$, more preferably 80 to 300 kg/m$^3$, still more preferably 80 to 290 kg/m$^3$, and furthermore preferably 90 to 280 kg/m$^3$.

In the present application document, the bulk density means the value measured according to JIS A5430 (calcium silicate board type 2).

The insulating elastic member of the present invention has a high porosity and a reduced bulk density as described above, so that particularly excellent insulating properties and elasticity can be exhibited.

The insulating elastic member according to the present invention has a single-layer structure.

In the present application, a single-layer structure means that the heat-resistant particles as insulating material and the organic elastic particles as elastic material are not in the form of separating layers, but that both are dispersed to form a single layer.

In the present application, whether or not the insulating elastic member has a single-layer structure can be checked by analyzing the cross section of the insulating elastic member using a field emission-type scanning electron microscope manufactured by JEOL Ltd., which is a scanning electron microscope energy dispersive X-ray spectrometer (SEM-EDX).

The insulating elastic member of the present invention has a single-layer structure, so that it is not required to prepare an insulating layer and an elastic layer separately and attach them to each other in production of the member, and as a result, the production cost can be reduced. It is also presumed that the insulating elastic member of the present invention, which has a single-layer structure, can exhibit comparable insulating properties and elasticity even with a reduced thickness, compared to an insulating elastic member that is a laminate of an insulating layer and an elastic layer.

The thickness of the insulating elastic member according to the present invention is not particularly limited and can be appropriately selected depending on the application.

In the case of using the insulating elastic member of the present invention as an insulating elastic member disposed between adjacent secondary battery cells, the lower limit of the thickness of the insulating elastic member may be selected from 1 mm, 2 mm, 3 mm, etc., and the upper limit of the thickness of the insulating elastic member may be selected from 10 mm, 9 mm, 8 mm, 7 mm, 6 mm, 5 mm, etc.

The thickness range of the insulating elastic member of the present invention may be a range of combination of the upper limit and the lower limit. The thickness of the insulating elastic member of the present invention is preferably 1 to 10 mm, more preferably 1 to 9 mm, and still more preferably 1 to 8 mm.

The compression recovery rate of the insulating elastic member according to the present invention is not particularly limited. In the "stress-strain curve (S-S curve)" measurement performed by the method described below, the compression recovery rate in the first cycle is preferably 20% to 100%, more preferably 20% to 50%, and still more preferably 20% to 30%, and in the second cycle preferably 45% to 100%, more preferably 50% to 100%, still more preferably 55% to 100%, further preferably 60% to 100%, and furthermore preferably 65% to 95%.

In the present application document, the compression recovery rate based on the "stress-strain curve (S-S curve)" measurement means the value calculated by the method described below.

The insulating elastic member according to the present invention is conveniently produced with high productivity by the production method according to the present invention described below.

The insulating elastic member according to the present invention can be suitably used, for example, as an insulating elastic member disposed between adjacent secondary battery cells, as insulating material for structures such as houses, buildings, and warehouses, as sound absorbing material, as soundproofing material, as fireproof joint material (joint material for fireproof members), as insulating material for transport equipment such as aircraft, vehicles, and ships.

In the case where the insulating elastic member according to the present invention is disposed between adjacent secondary battery cells, another member may be disposed together with the insulating elastic member according to the present invention. Examples of the other member disposed together with the insulating elastic member according to the present invention include one or more selected from known insulating materials and elastic bodies (rubber sheets, resin plates) other than the insulating elastic member according to the present invention.

According to the present invention, provided is an insulating elastic member having a single-layer structure containing respective predetermined amounts of insulating material and elastic material, which can be manufactured with high productivity, and exhibits excellent insulating properties and elasticity.

Next, a method for producing an insulating elastic member, according to the present invention, will be described.

The method for producing an insulating elastic member, according to the present invention, is a method for producing the insulating elastic member according to the present invention, comprising mixing an aqueous dispersion containing heat-resistant particles with one or more organic elastic particles selected from rubber particles and resin particles, and then dehydrating the mixture by gravity or suction.

In the method according to the present invention, the details of the heat-resistant particles and one or more organic elastic particles selected from rubber particles and resin particles are as in the description of the insulating elastic member of the present invention.

In the method according to the present invention, the amount of heat-resistant particles used and the amount of one or more organic elastic particles selected from rubber particles and resin particles used may be appropriately set depending on the composition of the insulating elastic member to be obtained.

In the method according to the present invention, the aqueous dispersion containing the heat-resistant particles may further contain one or more reinforcing fibers selected from inorganic fibers and organic fibers.

In the method according to the present invention, in the case where the aqueous dispersion containing heat-resistant particles further contains one or more reinforcing fibers selected from inorganic fibers and organic fibers, the details of the reinforcing fibers are as in the description of the insulating elastic member of the present invention.

Also, in the method according to the present invention, in the case where the aqueous dispersion containing heat-resistant particles further contains one or more reinforcing fibers selected from inorganic fibers and organic fibers, the amount of the reinforcing fibers used may be appropriately set depending on the composition of the insulating elastic

member to be obtained.

In the method according to the present invention, the aqueous dispersion containing the heat-resistant particles may further contain functional particles.

In the method according to the present invention, in the case where the aqueous dispersion containing heat-resistant particles further contains functional particles, the details of the functional particles are as in the description of the insulating elastic member of the present invention.

Also, in the method according to the present invention, in the case where the aqueous dispersion containing heat-resistant particles further contains functional particles, the amount of the functional particles used may be appropriately set depending on the composition of the insulating elastic member to be obtained.

In the method according to the present invention, the aqueous dispersion containing heat-resistant particles may contain hydrated lime together with the heat-resistant particles.

In the method according to the present invention, in the case where the aqueous dispersion containing heat-resistant particles such as calcium silicate particles contains hydrated lime in addition to heat-resistant particles such as calcium silicate particles, the surface of heat-resistant particles such as calcium silicate particles (and optionally reinforcing fibers) can be easily modified with Ca ions to easily improve the bonding with the organic elastic particles described below.

In the method according to the present invention, examples of the water constituting the aqueous dispersion containing heat-resistant particles include purified water such as ion-exchanged water (deionized water) and distilled water.

In the method according to the present invention, the concentration of the heat-resistant particles in the aqueous dispersion containing the heat-resistant particles is preferably 1.0 to 10.0 mass%, more preferably 1.0 to 7.0 mass%, and still more preferably 2.0 to 5.0 mass%.

In the method according to the present invention, in the case where the aqueous dispersion containing heat-resistant particles contains reinforcing fibers in addition to the heat-resistant particles, the concentration of the reinforcing fibers in the aqueous dispersion is preferably 0.1 to 10.0 mass%, more preferably 0.1 to 5.0 mass%, and still more preferably 0.1 to 1.0 mass%.

In the method according to the present invention, in the case where the aqueous dispersion containing heat-resistant particles contains functional particles together with the heat-resistant particles, the concentration of the functional particles in the aqueous dispersion is preferably 0.5 to 20.0 mass%, more preferably 0.5 to 10.0 mass%, and still more preferably 0.5 to 5.0 mass%.

In the method according to the present invention, in the case where the aqueous dispersion containing heat-resistant particles contains hydrated lime together with the heat-resistant particles, the concentration of hydrated lime in the aqueous dispersion is preferably 0.1 to 5.0 mass%, more preferably 0.1 to 2.0 mass%, and still more preferably 0.1 to 1.0 mass%.

In the method according to the present invention, an aqueous dispersion containing the heat-resistant particles is mixed with one or more organic elastic particles selected from rubber particles and resin particles.

In the method according to the present invention, one or more organic elastic particles selected from rubber particles and resin particles to be mixed into an aqueous dispersion containing the heat-resistant particles may be a solid (powder material), or may be an aqueous dispersion of organic elastic particles in water.

In the method according to the present invention, in the case where an aqueous dispersion of one or more organic elastic particles selected from rubber particles and resin particles is mixed with an aqueous dispersion containing heat-resistant particles, the concentration of the organic elastic particles in the aqueous dispersion of the organic elastic particles is preferably 2.0 to 50.0 mass%, more preferably 2.0 to 30.0 mass%, and still more preferably 2.0 to 5.0 mass%.

In the method according to the present invention, in the case where an aqueous dispersion of one or more organic elastic particles selected from rubber particles and resin particles is mixed with an aqueous dispersion containing heat-resistant particles, it is preferable that the aqueous dispersion of organic elastic particles be sprayed to add it to the aqueous dispersion containing heat-resistant particles.

In the method according to the present invention, it is preferable that a mixture of an aqueous dispersion containing heat-resistant particles and organic elastic particles be stirred sufficiently to obtain the aqueous dispersion containing heat-resistant particles and organic elastic particles.

In the method according to the present invention, when the heat-resistant secondary particles (having organic elastic particles attached to the surface of the heat-resistant particle) described later flocculate, air bubbles are easily captured between the heat-resistant secondary particles to easily form voids between the heat-resistant secondary particles if the mixture of an aqueous dispersion containing heat-resistant particles and organic elastic particles has been stirred sufficiently.

Also, in the method according to the present invention, when the heat-resistant secondary particles and the secondary fibers flocculate in the case where the aqueous dispersion containing heat-resistant particles contains reinforcing fibers together with the heat-resistant particles, air bubbles are easily captured between the heat-resistant

secondary particle and the secondary fiber to easily form voids between the heat-resistant secondary particle and the secondary fiber if the mixture of the heat-resistant particles, reinforcing fibers and organic elastic particles is stirred sufficiently.

In the method according to the present invention, after an aqueous dispersion containing heat-resistant particles (and optionally reinforcing fibers) is formed, the aqueous dispersion containing heat-resistant particles is mixed with organic elastic particles (and optionally reinforcing fibers), whereby the surface of the dispersed heat-resistant particles (and optionally the surface of reinforcing fibers) can be efficiently coated with the organic elastic particles.

In the method according to the present invention, the aqueous dispersion obtained by mixing an aqueous dispersion containing heat-resistant particles (and optionally reinforcing fibers) with one or more organic elastic particles selected from rubber particles and resin particles is preferably alkaline, and more preferably has a pH controlled to 10 or more (pH 10 to pH 14).

For the case where the heat-resistant particles are calcium silicate particles, it is known that calcium silicate constituting the calcium silicate particles has Ca ions that emerge on the surface under alkaline conditions.

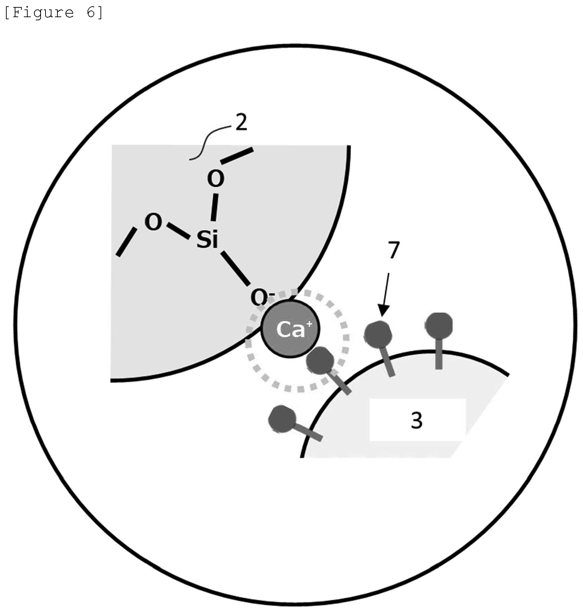

Figure 6 is a partially enlarged view schematically showing a state of an aqueous dispersion containing calcium silicate particles 2 and organic elastic particles 3 in the method according to the present invention.

As shown in Figure 6, in an aqueous dispersion containing calcium silicate particles 2 and organic elastic particles 3, Ca ions ($Ca^{+}$) are present on the surface of the calcium silicate particle 2.

In the case where the organic elastic particles 3 have hydrophilic groups 7 on the surface, a plurality of organic elastic particles 3 are attached to Ca ions on the surface of the calcium silicate particles 2 via ionic bonds to form calcium silicate secondary particles 5 including the calcium silicate particles 2 of which surfaces are coated with the organic elastic particles 3, as shown in Figure 4.

Furthermore, as described above, in the case where the aqueous dispersion containing calcium silicate particles contains hydrated lime together with calcium silicate particles in the method according to the present invention, the surface of calcium silicate particles 2 is easily modified with Ca ions, so that bonding properties to organic elastic particles 3 can be easily improved.

Also, it is known that reinforcing fibers such as rock wool have Ca ions that emerge on the surface under alkaline conditions.

Therefore, in the case where the aqueous dispersion containing calcium silicate particles contains reinforcing fibers together with the calcium silicate particles, the Ca ions are present on the surface of the calcium silicate particles as described above and also present on the surface of the reinforcing fibers in an aqueous dispersion containing calcium silicate particles, reinforcing fibers, and organic elastic particles obtained by mixing an aqueous dispersion containing calcium silicate particles and reinforcing fibers with organic elastic particles.

On this occasion, in the case where the organic elastic particles have hydrophilic groups on the surface, a plurality of organic elastic particles are attached to Ca ions on the surface of the reinforcing fiber via ionic bonds, so that a secondary fiber including the reinforcing fiber having a surface coated with organic elastic particles can be formed, and as described above, a calcium silicate secondary particle including the calcium silicate particle having a surface coated with organic elastic particles can be formed.

In the method according to the present invention, in the case where one or more organic elastic particles selected from rubber particles and resin particles are mixed with an aqueous dispersion containing heat-resistant particles, it is preferable that an anionic surfactant be mixed together with the organic elastic particles.

In the method according to the present invention, examples of the anionic surfactant include one or more selected from alkylbenzene sulfonates such as dodecylbenzene sulfonate, sodium dodecyl sulfate, polyoxyethylene alkyl ether acetates, laurates, polyoxyethylene alkyl ether sulfates, and di-2-ethylhexyl sulfosuccinate.

In the method according to the present invention, a nonionic surfactant may be used together with the anionic surfactant on an as needed basis.

Examples of the nonionic surfactant include one or more selected from polyoxyethylene alkyl phenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, and ethylene oxide adducts of acetylene alcohol.

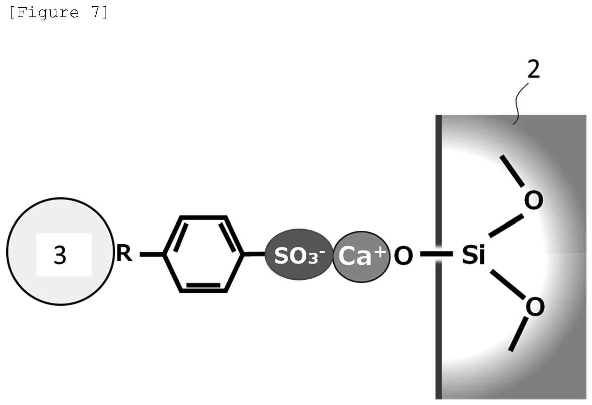

Figure 7 is a partially enlarged view schematically showing a state of an aqueous dispersion containing calcium silicate particles 2 and organic elastic particles 3 in the case where the heat-resistant particles are calcium silicate particles, in the method according to the present invention.

As shown in Figure 7, in an aqueous dispersion containing calcium silicate particles 2 and organic elastic particles 3, Ca ions are present on the surface of the calcium silicate particles 2.

On this occasion, in the case of using an alkylbenzene sulfonate, for example, as anionic surfactant as shown in Figure 7, the anionic group ($SO^{3-}$) of the alkylbenzene sulfonate ionically bonds to the Ca ion ($Ca^{+}$) on the surface of the calcium silicate particle 2, and the alkyl group (R-) of the alkylbenzene sulfonate exhibits affinity with the organic group of the organic elastic particle 3, so that the organic elastic particle 3 can be easily attached to the calcium silicate particle 2

through alkylbenzene sulfonate.

Thus, in the case where one or more organic elastic particles selected from rubber particles and resin particles are mixed with an aqueous dispersion containing calcium silicate particles, mixing an anionic surfactant together with the organic elastic particles allows a plurality of organic elastic particles 3 to be attached to the calcium silicate particle 2 through the anionic surfactant even in the case where the organic elastic particles 3 have no hydrophilic group on the surface, so that calcium silicate secondary particle with the surface of the calcium silicate particle 2 coated with the organic elastic particles 3 can be easily formed.

Similarly, in the case where the aqueous dispersion containing calcium silicate particles contains reinforcing fibers together with the calcium silicate particles and is mixed with organic elastic particles to obtain an aqueous dispersion containing calcium silicate particles, reinforcing fibers, and organic elastic particles, Ca ions are present on the surface of the calcium silicate particles as described above, and Ca ions are also present on the surface of the reinforcing fiber, in the resulting aqueous dispersion.

On this occasion, in the case where an anionic surfactant is present in the aqueous dispersion, a plurality of the organic elastic particles are attached to the reinforcing fiber and calcium silicate particle through the anionic surfactant even in the case where the organic elastic particles have no hydrophilic group on the surface. Thereby, a secondary fiber including the reinforcing fiber having a surface coated with the organic elastic particles can be formed, and also a calcium silicate secondary particle including the calcium silicate particle having a surface coated with the organic elastic particles can be easily formed.

In the method according to the present invention, most of the calcium silicate secondary particles generated in the aqueous dispersion containing the heat-resistant particles and the organic elastic particles flocculate while rising to the surface in the aqueous dispersion, to thereby form aggregates (flocs).

Similarly, in the method according to the present invention, in the case where the aqueous dispersion containing heat-resistant particles contains reinforcing fibers together with calcium silicate particles and is mixed with the organic elastic particles to obtain an aqueous dispersion containing calcium silicate particles, reinforcing fibers, and organic elastic particles, most of the calcium silicate secondary particles and the secondary fibers flocculate while they rise to the surface in the resulting aqueous dispersion, to thereby form an aggregate (flocs).

In the method according to the present invention, after mixing an aqueous dispersion containing heat-resistant particles with organic elastic particles to obtain an aqueous dispersion containing the heat-resistant particles and the organic elastic particles, a flocculant may be further mixed therewith.

In other words, the method according to the present invention may include mixing an aqueous dispersion containing heat-resistant particles with one or more organic elastic particles selected from rubber particles and resin particles, further mixing a resultant with a flocculant, and then dehydrating by gravity or suction.

In the method according to the present invention, examples of the flocculant include those as listed in the description of the insulating elastic member of the present invention.

In the method according to the present invention, after an aqueous dispersion containing heat-resistant particles is mixed with organic elastic particles to obtain an aqueous dispersion containing heat-resistant particles and organic elastic particles, a flocculant can be further added thereto to sufficiently flocculate the heat-resistant secondary particles produced in the aqueous dispersion, so that the aggregate (flocs) can be effectively formed.

Similarly, in the method according to the present invention, in the case where the aqueous dispersion containing heat-resistant particles contains reinforcing fibers together with the heat-resistant particles and is mixed with organic elastic particles to obtain an aqueous dispersion containing the heat-resistant particles, reinforcing fibers, and organic elastic particles, a flocculant can be further mixed therewith, so that the heat-resistant secondary particles and secondary fibers produced in the aqueous dispersion can be sufficiently flocculated to effectively form the aggregate (flocs).

In the method according to the present invention, the heat-resistant secondary particles (and optionally secondary fibers) are flocculated to form an aggregate (flocs), and then the resulting flocs are taken out to be dehydrated by gravity or suction.

The method for dehydration by gravity is not particularly limited, and any known method may be appropriately employed. For example, the aggregate (flocs) may be appropriately discharged onto a wire mesh or sieve and left for a predetermined period of time.

The method of dehydration by suction is not particularly limited, and any known method may be appropriately used. For example, the aggregate (flocs) is appropriately discharged into a mold having a wire mesh or sieve disposed at the bottom, and the aqueous medium is sucked.

In the method according to the present invention, the aggregate (flocs) of the heat-resistant secondary particles is dehydrated by gravity or suction, i.e., dehydrated without applying pressure, so that voids formed between the heat-resistant secondary particles during formation of the floc (and optionally voids formed between the heat-resistant secondary particles and the secondary fibers) can be maintained. Thereby, an insulating elastic member having an extremely high porosity and a reduced bulk density is effectively produced.

In the method according to the present invention, it is preferable that the aggregate dehydrated by gravity

dehydration or suction dehydration be subjected to an appropriate drying treatment.

The drying treatment may be performed by heating or natural drying. In the case where drying is performed by heating, it is preferable that the drying treatment be performed under heating conditions for removing moisture, for example, at a temperature of 80 to 150°C for 2 to 24 hours.

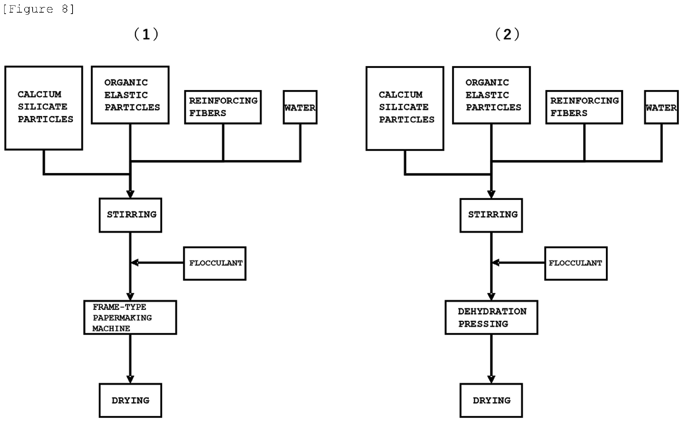

Figure 8 to Figure 11 are production flow diagrams showing a mode of the production method of an insulating elastic member.

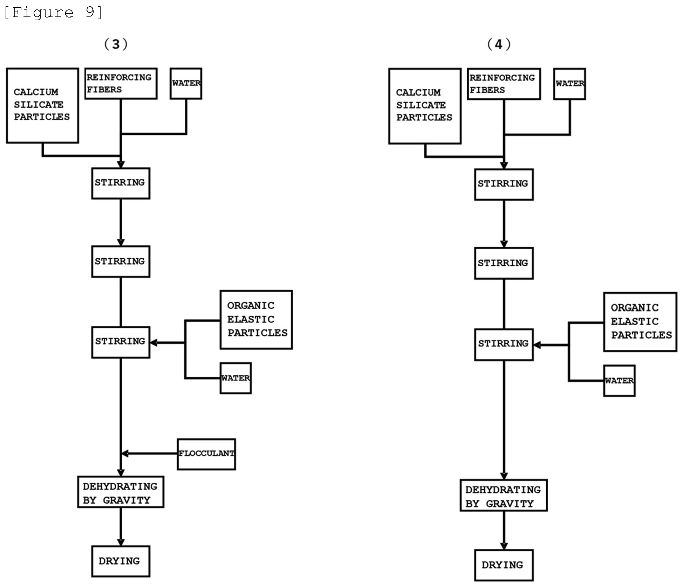

The production mode example (1) and the production mode example (2), of which production flow is shown in Figure 8, are production mode examples corresponding to Comparative Examples of the production method according to the present invention, and the production mode example (3) to the production mode example (6), of which production flows are shown in Figure 9 to Figure 11, are production mode examples corresponding to Examples of the production method according to the present invention.

In production mode example (1) and production mode example (2) shown in Figure 8 (production mode examples corresponding to Comparative Examples of the production method according to the present invention), calcium silicate particles as heat-resistant particles, one or more organic elastic particles selected from rubber particles and resin particles, and reinforcing fibers are mixed and stirred in water all at once to obtain an aqueous dispersion containing calcium silicate particles, organic elastic particles, and reinforcing fibers, and then a flocculant is added. Subsequently, the mixture is introduced into a frame-type papermaking machine to form a sheet through dehydration and molding (production mode example (1)), or introduced into a dehydration press molding machine to be dehydrated and press molded (production mode example (2)), and then dried to produce an insulating elastic member.

In the production mode example (1) and the production mode example (2) shown in Figure 8, the heat-resistant particles, organic elastic particles, and reinforcing fibers are mixed and stirred in water all at once, which causes uneven distribution of the components in the water, so that the organic elastic particles hardly adhere to the surface of the heat-resistant particles.

Also, in the production mode example (1) and the production mode example (2) in Figure 8 (production mode examples corresponding to Comparative Examples of the production method according to the present invention), an aqueous dispersion containing heat-resistant particles, organic elastic particles, and reinforcing fibers is dehydrated and molded by a frame-type papermaking machine or dehydrated and press-molded, so that the dewaterability (filterability) is reduced, resulting in difficulty in molding and causing shrinkage after drying, with easy occurrence of cracking and warpage.

In the production mode example (3) and the production mode example (4) (production mode examples corresponding to Examples of the production method according to the present invention), of which production flow is shown in Figure 9, calcium silicate particles as heat-resistant particles and reinforcing fibers are mixed and stirred in water to obtain an aqueous dispersion containing calcium silicate particles and reinforcing fibers, which is then mixed with an aqueous dispersion of one or more organic elastic particles selected from rubber particles and resin particles. Subsequently, the mixture is dehydrated by gravity (after adding a flocculant in the production mode example (3)), and then dried to produce an insulating elastic member.

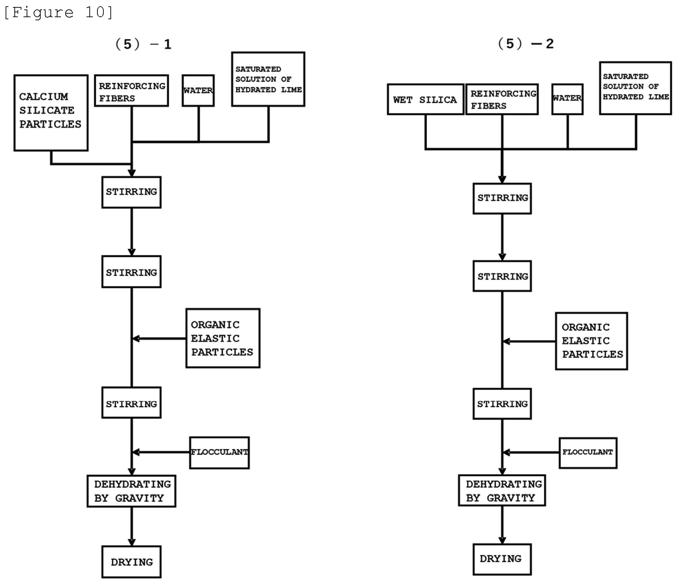

Also, in the production mode example (5)-1 (a production mode example corresponding to Example of the production method according to the present invention), of which production flow is shown in Figure 10, calcium silicate particles as heat-resistant particles, reinforcing fibers, and a saturated solution of hydrated lime are mixed and stirred in water to obtain an aqueous dispersion containing calcium silicate particles and reinforcing fibers, which is then mixed with an aqueous dispersion of one or more organic elastic particles selected from rubber particles and resin particles. Subsequently, a flocculant is added thereto, and the resulting mixture is dehydrated by gravity, and then dried to produce an insulating elastic member.

Furthermore, in the production mode example (5)-2 (a production mode example corresponding to Example of the production method according to the present invention), of which production flow is shown in Figure 10, wet silica as heat-resistant particles, reinforcing fibers, and a saturated solution of hydrated lime are mixed and stirred in water to obtain an aqueous dispersion containing wet silica particles coated with C-S-H gel and reinforcing fibers, which is then mixed with an aqueous dispersion of one or more organic elastic particles selected from rubber particles and resin particles. Subsequently a flocculant is added thereto, and the resulting mixture is then dehydrated by gravity and dried to produce an insulating elastic member.

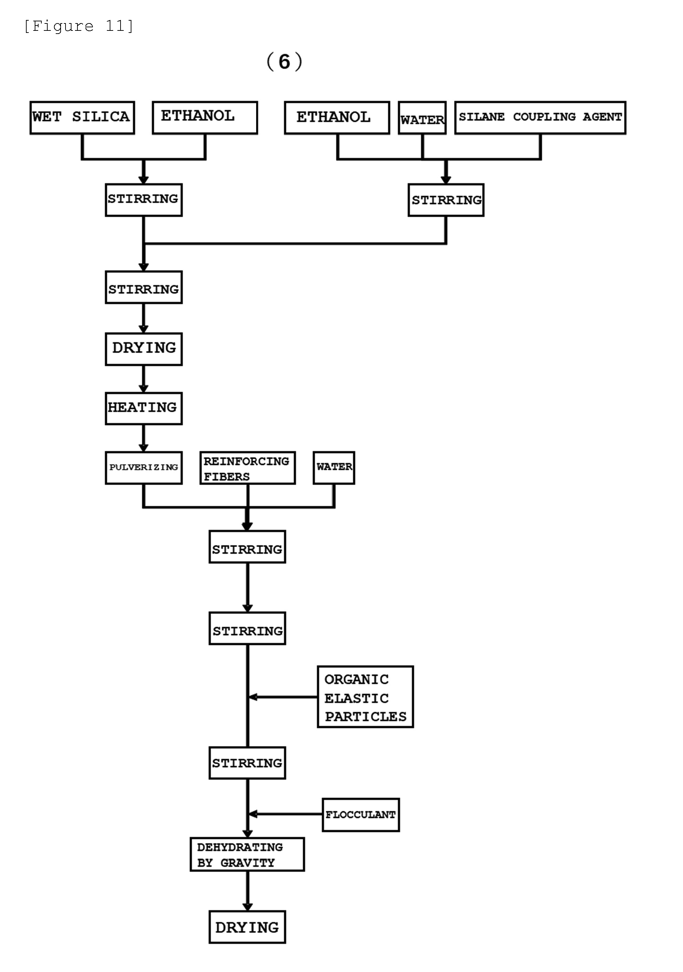

In the production mode example (6) (a production mode example corresponding to Example of the production method according to the present invention), of which production flow is shown in Figure 11, first, a dispersion of wet silica obtained by mixing wet silica as heat-resistant particles and ethanol, and a dispersion of a silane coupling agent obtained by mixing a silane coupling agent having an organic bonding group and a hydroxyl group (silanol group) on the surface, ethanol and water are mixed and stirred in water to obtain a dispersion of silica particles having organic bonding groups on the surface, which is then dried and heated, and then pulverized to obtain a solid product of silica particles having organic bonding groups on the surface.

Then, after the silica particles (solid) having organic bonding groups on their surfaces and the reinforcing fibers

are mixed and stirred in water to obtain an aqueous dispersion containing the silica particles having organic bonding groups and the reinforcing fibers, and an aqueous dispersion of one or more organic elastic particles selected from rubber particles and resin particles is mixed therewith and stirred. Then, a flocculant is added thereto, and the mixture is dehydrated by gravity and subsequently dried to produce an insulating elastic member.

In the production mode example (3) to the production mode example (6) (production mode examples corresponding to Examples of the production method according to the present invention), of which production flows are shown in Figure 9 to Figure 11, an aqueous dispersion containing heat-resistant particles is prepared, and then one or more organic elastic particles selected from rubber particles and resin particles are mixed with the aqueous dispersion containing the heat-resistant particles. Thereby, each component can be dispersed in water with high dispersibility, and the organic elastic particles can be effectively attached to the surface of the heat-resistant particles.

Also, in the production mode examples (3) to (6) (production mode examples corresponding to Examples of the production method according to the present invention), of which production flows are shown in Figure 9 to Figure 11, the aqueous dispersion containing the heat-resistant particles, the organic elastic particles, and the reinforcing fibers is dehydrated by gravity, so that dehydration can be performed under excellent dewaterability (filterability), hardly causing cracking and warpage due to shrinkage after drying.

Thus, in the method according to the present invention, an insulating elastic member including an aggregate of a plurality of heat-resistant secondary particles including the organic elastic particles attached to the surface of the heat-resistant particle can be produced, wherein voids are formed between the heat-resistant secondary particles so that the insulating elastic member has extremely high porosity and a reduced bulk density.

Similarly, in the method according to the present invention, in the case where the aqueous dispersion containing heat-resistant particles contains reinforcing fibers together with the heat-resistant particles, an insulating elastic member including an aggregate of heat-resistant secondary particles and secondary fibers can be produced; wherein the heat-resistant secondary particles include the organic elastic particles attached to the surface of the heat-resistant particle, and wherein the secondary fibers include the organic elastic particles attached to the surface of the reinforcing fiber, and wherein voids are formed between the heat-resistant secondary particles and the secondary fibers, so that the insulating elastic member has extremely high porosity and a reduced bulk density.

In other words, as schematically illustrated in Figure 1, in the case where the heat-resistant particles are calcium silicate particles, an insulating elastic member 1 having an extremely high porosity and a reduced bulk density can be produced, wherein the insulating elastic member 1 includes an aggregate of a plurality of calcium silicate secondary particles 5 including organic elastic particles attached to the surfaces of the calcium silicate particles and a plurality of secondary fibers 6, and wherein voids h are formed between the plurality of calcium silicate secondary particles 5 and secondary fibers 6.

According to the present invention, a method for easily producing an insulating elastic member having a single-layer structure at high productivity can be provided, the insulating elastic member containing respective predetermined amounts of insulating material and elastic material and exhibiting excellent insulating properties and elasticity, .

Next, a secondary battery according to the present invention will be described.

The secondary battery according to the present invention comprises the insulating elastic member according to the present invention disposed between adjacent secondary battery cells.

In the secondary battery according to the present invention, the details of the insulating elastic member according to the present invention are as described above.

Specific examples of the secondary battery according to the present invention include a lithium secondary battery.

According to the present invention, the insulating elastic member of the present invention is disposed between adjacent secondary battery cells, so that the insulating elastic member exhibits excellent insulating properties and elasticity, and thus, in the resulting secondary battery, heat conduction to adjacent secondary battery cells and damage to the secondary battery cells can be effectively suppressed.

Next, the present invention will be described in more detail by way of Examples and Comparative Examples; however, these are merely illustration without any limitations on the present invention.

In the following Examples and Comparative Examples, the following components were used.

The average particle size of the heat-resistant particles and organic elastic particles each shown below means the particle size at 50% of the cumulative particle size in the volume-cumulative particle size distribution (median diameter (D50)) measured by laser diffraction/scattering using a laser diffraction particle size distribution analyzer Sync&Image (measurement range: 0.02 to 2000 mm) manufactured by MicrotracBEL Corp.

The average length of the reinforcing fibers shown below means the arithmetic mean value when the lengths of 100 reinforcing fibers are measured using a digital microscope VHX-8000 manufactured by Keyence Corporation.

<Heat-resistant particles>

(Calcium silicate particles)

- Calcium silicate hydrate (C-S-H gel) particles (average particle size (D50): 5.00 mm)
- Xonotlite particles (average particle size (D50): 40.00 mm)
- Calcium silicate hydrate (C-S-H gel)-coated wet silica particles (average particle size (D50): 5.00 mm, used in Examples 9 and 13 to 15)

The calcium silicate hydrate (C-S-H gel)-coated wet silica was prepared by the method including mixing calcium-saturated water (concentration: 0.2 mass%) and wet silica (average particle size (D50): 15 mm) at normal temperature.

(Silica particles)

- Wet silica (manufactured by Evonik, average particle size (D50): 5.00 mm)

<Organic elastic particles>

- Acrylonitrile butadiene copolymer (NBR) (LX551 manufactured by Zeon Corporation, average particle size (D50): 0.10 mm, containing alkylbenzene sulfonate)
- Silicone resin (KN9772 manufactured by Shin-Etsu Chemical Co., Ltd., average particle size (D50): 0.1 mm, containing alkylbenzene sulfonate)
- Acrylic resin 1 (R-3000A manufactured by DIC Corporation, average particle size (D50): 0.1 mm, containing alkylbenzene sulfonate)
- Acrylic resin 2 (LX874 manufactured by Zeon Corporation, average particle size (D50): 0.3 mm, containing di-2-ethylhexyl sulfosuccinate) <Reinforcing fiber>
- Glass fiber 1 (manufactured by Nitto Boseki Co., Ltd., average length: 2.0 mm)
- Glass fiber 2 (manufactured by Daiso Chemical Co., Ltd., average length: 6.0 mm)
- Glass fiber 3 (milled fiber, average length: 150 mm)
- Rock wool (manufactured by Nichias Corporation, average length: 2.0 mm)
- Kraft pulp (average length: 2.0 mm)

<Flocculant>

- Cationic polymer flocculant (Sanfloc C-009P manufactured by Sanyo Chemical Industries, Ltd.)
- Anionic polymer flocculant (AH-200P manufactured by Sunfloc Co., Ltd.)

<Others>

- Silane coupling agent (KBM-903 manufactured by Shin-Etsu Chemical Co., Ltd., containing a hydroxyl group (silanol group) and an amino group as organic bonding group)

(Example 1 to Example 11 (Production examples according to "Production mode example (3)" and "Production mode example (4)"))

In Example 1 to Example 11, an insulating elastic member was prepared by mixing the components so as to achieve the respective contents (mass%) shown in in Table 1 in the resulting insulating elastic member, according to the production flow of "Production mode example (3)" or "Production mode example (4)" shown in Figure 9.

(1) First, the components as calcium silicate particles and reinforcing fibers shown in Table 1 were weighed out, and

water was added thereto to adjust the total solid concentration to 5 mass%. The mixture was then stirred for 3 minutes in a mixer/juicer and then stirred at 1000 rpm in a tabletop stirrer to obtain an aqueous dispersion containing calcium silicate particles and reinforcing fibers.

(2) The component as organic elastic particles shown in Table 1 was weighed out, and water was further added thereto to prepare an aqueous dispersion containing organic elastic particles and having a total solid concentration of 5 mass%.

While stirring the aqueous dispersion containing calcium silicate particles and reinforcing fibers obtained in the operation (1) at 1000 rpm with a tabletop stirrer, the entire amount of the aqueous dispersion containing organic elastic particles was added thereto by spraying.

(3) After completing the addition of the aqueous dispersion containing the organic elastic particles in the operation (2), a cationic polymer flocculant was further added in an amount of 1 part by mass per 100 parts by mass of the total amount of the calcium silicate particles, organic elastic particles and reinforcing fibers, to thereby obtain an aqueous dispersion in which an aggregate (flocs) generated and floated near the liquid level (provided that, in Examples 10 and 11, according to "Production mode example (4)", the operation (4) and subsequent operations were performed without performing the process in (3)).

(4) The aqueous dispersion containing the aggregate (flocs) obtained in the operation (3) (in Example 10 and Example 11, the aqueous dispersion obtained in the operation (2)) was discharged into a formwork having a wire mesh bottom, and was allowed to stand for 2 minutes to perform dehydration by gravity.

(5) The aggregate (flocs) obtained by the operation (4) was dried at 80°C for 600 minutes (Example 1, Example 2, Example 4, Example 6, and Example 8) or at 105°C for 600 minutes (Example 3, Example 5, Example 7, and Example 9 to Example 11) to obtain an insulating elastic member.

By checking scanning electron microscope (SEM) images of the cross sections of the insulating elastic members obtained in Example 1 to Example 11, it was confirmed that each insulating elastic member had a single-layer structure in which voids were formed between calcium silicate secondary particles and between the calcium silicate secondary particles and the secondary fibers.

A scanning electron microscope (SEM) image of a cross section of the insulating elastic member obtained in Example 7 is shown in Figure 3, and partially enlarged views of the cross section are shown in Figure 4 and Figure 5.

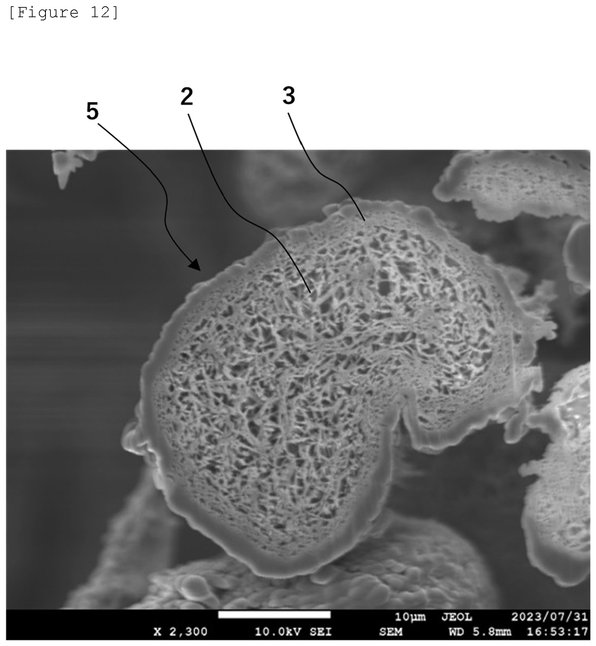

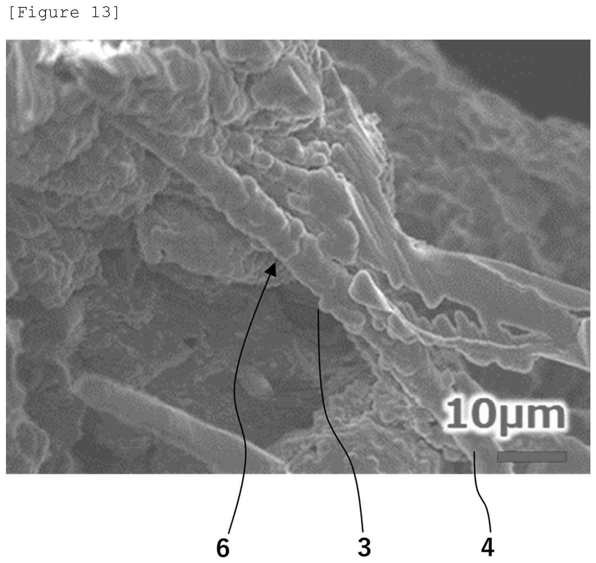

Also, enlarged images of the cross section of an insulating elastic member obtained in Example 6 taken with a scanning electron microscope (SEM) are shown in Figure 12 and Figure 13.

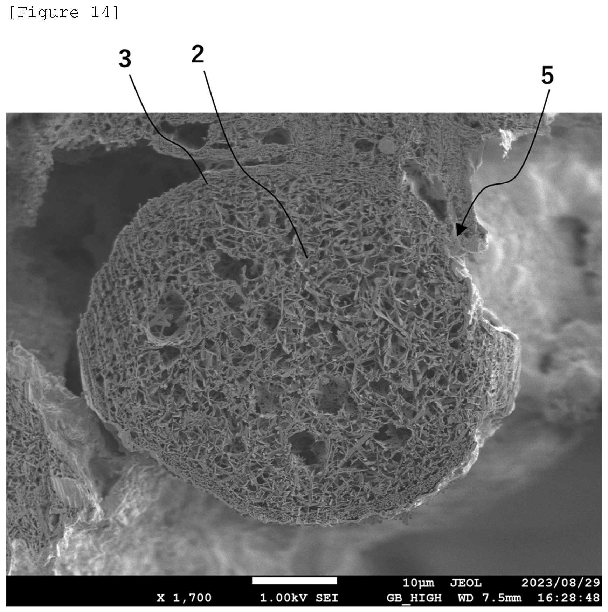

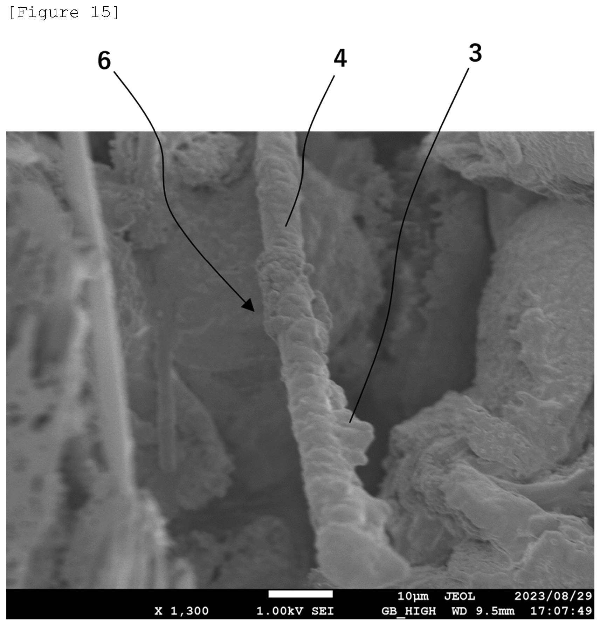

Furthermore, enlarged images of the cross section of an insulating elastic member obtained in Example 8 taken with a scanning electron microscope (SEM) are shown in Figure 14 and Figure 15.

As shown in Figure 4, Figure 12 and Figure 14, the insulating elastic members obtained in Examples each contain calcium silicate secondary particles 5 including organic elastic particles 3 attached to the surface of calcium silicate particle 2.

Also, as shown in Figure 5, Figure 13, and Figure 15, the insulating elastic members obtained in Examples each contain secondary fibers 6 including organic elastic particles 3 attached to the surface of reinforcing fiber 4.

<Evaluation on moldability>

The moldability (dewaterability (filterability), drying shrinkage, and handling properties) in the production process of the insulating elastic members each was evaluated according to the following criteria. The results are shown in Table 1.

(Dewaterability (filterability))

◦: On the floc (solid content) obtained through dehydration by gravity of aqueous dispersion containing the floc, no water is visually found.

×: On the floc (solid content) obtained through dehydration by gravity of aqueous dispersion containing the floc, water is visually found.

(Drying shrinkage)

◦: On the surface of the dried product (insulating elastic member) obtained by drying the floc, none of cracks, fissures, warps, etc. is visually found.

×: On the surface of the dried product (insulating elastic member) obtained by drying the floc, cracks, fissures, warps, etc. are visually found.

(Handling properties)

◦: The floc (solid content) obtained by dehydrating the aqueous dispersion containing flocs by gravity can be lifted by hand, having elasticity when pressed with fingertips.
×: The floc (solid content) obtained by dehydrating the aqueous dispersion containing flocs by gravity cannot be lifted by hand, developing cracks or the like with no shape retentionability when pressed with fingertips.

<Porosity>

The porosity of each of the resulting insulating elastic members was measured by the following method.

(1) The true density (kg/m$^3$) of the insulating elastic member as measurement sample is measured by the specific gravity bottle (pycnometer) method specified in JIS K 0061.
(2) According to the provisions of JIS A5430 (calcium silicate board type 2), the mass of the measurement sample is measured using an electronic balance, and the dimensions of the measurement sample are measured using a vernier caliper and a micrometer. The bulk density (kg/m$^3$) of the measurement sample is calculated based on the resulting values.
(3) The porosity (%) is calculated from the true density (kg/m$^3$) and bulk density (kg/m$^3$) of the measurement sample obtained in (1) and (2) described above, according to the following formula:

Porosity (%)={(True density-Bulk density)/True density}×100

The results are shown in Table 1.

<Bulk density>

The bulk density of the resulting insulating elastic members each was measured according to JIS A5430 (calcium silicate board type 2). The results are shown in Table 1.

<Evaluation on heat resistance >

The resulting insulating elastic members as measurement samples each were rapidly heated in an elevator furnace at 800°C for 5 minutes, and the heat resistance (mass loss rate (mass%), volume shrinkage rate (vol%), and handling properties) was calculated or evaluated by the following methods. The results are shown in Table 1.

(Mass loss rate)

The mass loss rate (mass%) of the resulting insulating elastic members as the measurement samples each was calculated according to the following formula.

Mass loss rate (mass%)={(Mass before heating (g)-Mass after heating (g))/Mass before heating (g)}×100 (Volume shrinkage rate)

The volume shrinkage rate (vol%) of the resulting insulating elastic members as the measurement samples each was calculated according to the following formula.

Volume shrinkage rate (vol%)=(Volume after heating (cm$^3$)/Volume before heating (cm$^3$))×100

The volume (cm$^3$) before heating and the volume (cm$^3$) after heating were calculated by measuring the dimensions of the resulting insulating elastic members as the measurement samples each using a vernier caliper and a micrometer.

(Handling properties)

◦: The resulting insulating elastic members as the measurement sample each can be lifted by hand, and is not broken when pressed with the fingertips.
×: When the resulting insulating elastic members as the measurement sample each is lifted by hand, the shape cannot be retained due to occurrence of cracks or the like.

<Thermal conductivity>

The thermal conductivity of the insulating elastic member obtained in Example 7 as the measurement sample was measured according to JIS A1412-2 using Autolambda HC-074 manufactured by Eko Instruments Co., Ltd. The results are shown in Table 1.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Calcium silicate particles (mass%) | C-S-H gel | 60 | 50 | 30 | 40 | 40 | 0 | 0 | 0 | 0 | 20 | 25 |
| | Xonotlite | 0 | 0 | 0 | 0 | 0 | 40 | 40 | 40 | 0 | 20 | 25 |
| | Wet silica coated with C-S-H gel | 0 | 0 | 0 | 0 | 0 | 0 | 0 | 0 | 40 | 0 | 0 |
| Organic elastic particles (mass%) | NBR | 30 | 40 | 0 | 50 | 0 | 50 | 0 | 0 | 0 | 0 | 0 |
| | Silicone resin | 0 | 0 | 60 | 0 | 50 | 0 | 50 | 0 | 50 | 50 | 50 |
| | Acrylic resin 1 | 0 | 0 | 0 | 0 | 0 | 0 | 0 | 50 | 0 | 0 | 0 |
| Reinforcing fibers (mass%) | Glass fiber 1 | 10 | 10 | 0 | 0 | 0 | 0 | 0 | 0 | 0 | 0 | 0 |
| | Rock wool | 0 | 0 | 10 | 10 | 10 | 10 | 10 | 10 | 10 | 10 | 0 |
| Cationic polymer flocculant (part by mass) | | 1 | 1 | 1 | 1 | 1 | 1 | 1 | 1 | 1 | 0 | 0 |
| Moldability | Dewaterability | ○ | ○ | ○ | ○ | ○ | ○ | ○ | ○ | ○ | ○ | ○ |
| | Drying shrinkage | ○ | ○ | ○ | ○ | ○ | ○ | ○ | ○ | ○ | ○ | ○ |
| | Handling property | ○ | ○ | ○ | ○ | ○ | ○ | ○ | ○ | ○ | ○ | ○ |
| Bulk density [kg/m$^3$] | | 145 | 187 | 160 | 220 | 222 | 200 | 140 | 210 | 150 | 227 | 180 |
| Porosity [%] | | 90 | 90 | 90 | 88 | 87 | 89 | 92 | 88 | 91 | 87 | 89 |
| Heat resistance | Mass loss rate [mass%] | 40 | 48 | 23 | 55 | 23 | 52 | 17 | 51 | 18 | 28 | 25 |
| | Volume shrinkage rate [vol%] | 44 | 45 | 16 | 44 | 17 | 1 | 0 | 0 | 11 | 0 | 0 |
| | Handling property | × | × | ○ | × | ○ | ○ | ○ | ○ | ○ | ○ | × |
| Thermal conductivity (W/mk) | | - | - | - | - | - | - | 0.0369 | - | - | - | - |

(Example 12 to Example 15 (Production examples according to "Production mode example (4)"))

In Example 12 to Example 15, an insulating elastic member was prepared by mixing the components so as to achieve the respective contents (mass%) shown in Table 2 in the resulting insulating elastic member, according to the production flow of "Production mode example (4)" shown in Figure 9.

(1) First, the components as calcium silicate particles and reinforcing fibers shown in Table 2 were weighed out, and water was added thereto to adjust the total solid concentration to 5 mass%. The mixture was then stirred for 3 minutes in a mixer/juicer and then stirred at 1000 rpm in a tabletop stirrer to obtain an aqueous dispersion containing calcium silicate particles and reinforcing fibers.
(2) The component as organic elastic particles shown in Table 1 was weighed out, and water was further added thereto to prepare an aqueous dispersion containing organic elastic particles and having a total solid concentration to 5 mass%.

While stirring the aqueous dispersion containing calcium silicate particles and reinforcing fibers obtained in the operation (1) at 1000 rpm with a tabletop stirrer, the entire amount of the aqueous dispersion containing organic elastic particles was added to the aqueous dispersion by spraying. As a result, an aqueous dispersion with an aggregate (flocs) generated and floated near the liquid level was obtained.
(3) The aqueous dispersion containing the aggregate (flocs) obtained in the operation (2) was discharged into a formwork having a wire mesh bottom, and was allowed to stand for 2 minutes to perform dehydration by gravity.
(4) The aggregates (flocs) obtained in the operation (3) was dried at 80°C for 600 minutes (Example 12 to Example 15) to obtain an insulating elastic member.
By checking scanning electron microscope (SEM) images of the cross sections of the insulating elastic members obtained in Example 12 to Example 15, it was confirmed that each insulating elastic member had a single-layer structure in which voids were formed between calcium silicate secondary particles, and between the calcium silicate secondary particles and the secondary fibers.
For each of the resulting insulating elastic members, the moldability (dewaterability (filterability), drying shrinkage, and handling properties), porosity, bulk density and heat resistance were calculated or evaluated in the same manner as in Example 1 to Example 11. The results are shown in Table 2.

(Example 16 to Example 18 (Production examples according to "Production mode example (5)-1")

In Example 16 to Example 18, an insulating elastic member was prepared by mixing the components so as to achieve the respective contents (mass%) shown in Table 2 in the resulting insulating elastic member, according to the production flow of "Production mode example (5)-1" shown in Figure 10.

(1) First, the components as calcium silicate particles and reinforcing fibers weighed out to achieve the respective contents shown in Table 2, saturated hydrated lime solution (concentration: 0.2 mass%) in an amount of 5 parts by mass per 100 parts by mass of the organic elastic particles described below in terms of solid content, and water were mixed such that the resulting mixture had a total solid concentration of 5 mass%. The mixture was stirred for 3 minutes with a mixer/juicer, and then stirred at 1000 rpm with a tabletop stirrer to obtain an aqueous dispersion containing calcium silicate particles and reinforcing fibers.
(2) While stirring the aqueous dispersion containing calcium silicate particles and reinforcing fibers obtained in the operation (1) at 1000 rpm with a tabletop stirrer, the component as organic elastic particles weighed out so as to achieve the content shown in Table 2 were added thereto, and the mixture was further stirred for 15 minutes with the tabletop stirrer.
(3) After completing stirring for 15 minutes with the tabletop stirrer in the operation (2), a cationic polymer flocculant was added in an amount of 1 part by mass per 100 parts by mass of the total amount of the calcium silicate particles, organic elastic particles, and reinforcing fibers. As a result, an aqueous dispersion with an aggregate (flocs) generated and floated near the liquid level was obtained.
(4) The aqueous dispersion containing the aggregate (flocs) obtained in the operation (3) was discharged into a formwork having a wire mesh bottom, and was allowed to stand for 2 minutes to perform dehydration by gravity.
(5) Each of the aggregate (flocs) obtained in the operation (4) was dried at 80°C for 600 minutes (Example 17 and Example 18), or dried at 105°C for 600 minutes (Example 16) to obtain an insulating elastic member.

By checking scanning electron microscope (SEM) images of the cross sections of the insulating elastic members each obtained in Example 16 to Example 18, it was confirmed that each insulating elastic member had a single-layer structure in which voids were formed between calcium silicate secondary particles, and between the calcium silicate

secondary particles and the secondary fibers.

[Table 2]

| | | Example 12 | Example 13 | Example 14 | Example 15 | Example 16 | Example 17 | Example 18 |
|---|---|---|---|---|---|---|---|---|
| Calcium silicate particles (mass%) | C-S-H gel | 40 | 0 | 0 | 0 | 0 | 0 | 0 |
| | Xonotlite | 0 | 0 | 0 | 0 | 40 | 40 | 40 |
| | Wet silica coated with C-S-H gel | 0 | 40 | 40 | 25 | 0 | 0 | 0 |
| Organic elastic particles (mass%) | NBR | 0 | 50 | 0 | 0 | 0 | 0 | 0 |
| | Silicone resin | 0 | 0 | 0 | 0 | 50 | 0 | 0 |
| | Acrylic resin 1 | 50 | 0 | 50 | 0 | 0 | 0 | 0 |
| | Acrylic resin 2 | 0 | 0 | 0 | 50 | 0 | 50 | 50 |
| Reinforcing fibers (mass%) | Glass fiber 1 | 0 | 0 | 0 | 0 | 0 | 0 | 0 |
| | Glass fiber 2 | 0 | 0 | 0 | 0 | 0 | 0 | 0 |
| | Rock wool | 10 | 10 | 10 | 25 | 10 | 10 | 0 |
| | Kraft pulp | 0 | 0 | 0 | 0 | 0 | 0 | 10 |
| Cationic polymer flocculant (part by mass) | | 0 | 0 | 0 | 0 | 1 | 1 | 1 |
| Moldability | Dewaterability | ○ | ○ | ○ | ○ | ○ | ○ | ○ |
| | Drying shrinkage | ○ | ○ | ○ | ○ | ○ | ○ | ○ |
| | Handling property | ○ | ○ | ○ | ○ | ○ | ○ | ○ |
| Bulk density [kg/m$^3$] | | 266 | 270 | 290 | 280 | 110 | 121 | 114 |
| Porosity [%] | | 84 | 85 | 83 | 83 | 94 | 93 | 93 |
| Heat resistance | Mass loss rate [mass%] | 57 | 52 | 53 | 51 | - | - | - |
| | Volume shrinkage rate [vol%] | 32 | 12 | 1 | 0 | - | - | - |
| | Handling property | × | ○ | ○ | ○ | - | - | - |

(Example 19 to Example 22 (Production examples according to "Production mode example (5)-2")

In Example 19 to Example 20, an insulating elastic member was prepared by mixing the components so as to achieve the respective contents (mass%) shown in Table 3 in the resulting insulating elastic member, according to the production flow of "Production mode example (5)-2" shown in Figure 10.

(1) First, wet silica particles and reinforcing fibers, saturated hydrated lime solution (concentration: 0.2 mass%) in an amount of 5 parts by mass per 100 parts by mass of the organic elastic particles described below in terms of solid content, and water were mixed such that the resulting mixture had a total solid concentration of 5 mass%. The mixture was stirred for 3 minutes with a mixer/juicer, and then stirred at 1000 rpm with a tabletop stirrer to obtain an aqueous dispersion containing calcium silicate particles (wet silica particles coated with calcium silicate hydrate) and reinforcing fibers.

(2) While stirring the aqueous dispersion containing calcium silicate particles (wet silica particles coated with calcium silicate hydrate) and reinforcing fibers obtained in the operation (1) at 1000 rpm with a tabletop stirrer, the component as organic elastic particles weighed out so as to achieve the content shown in Table 3 were added thereto and the mixture was further stirred for 15 minutes with the tabletop stirrer.

(3) After completing stirring for 15 minutes with the tabletop stirrer in the operation (2), a cationic polymer flocculant was added in an amount of 1 part by mass per 100 parts by mass of the total amount of the calcium silicate particles, organic elastic particles, and reinforcing fibers. As a result, an aqueous dispersion with an aggregate (flocs) generated and floated near the liquid level was obtained.
(4) The aqueous dispersion containing the aggregate (flocs) obtained in the operation (3) was discharged into a formwork having a wire mesh bottom, and was allowed to stand for 2 minutes to perform dehydration by gravity.
(5) Each of the aggregate (flocs) obtained in the operation (4) was dried at 80°C for 600 minutes to obtain each of the insulating elastic members.

By checking scanning electron microscope (SEM) images of the cross sections of the insulating elastic members each obtained in Example 19 to Example 22, it was confirmed that each insulating elastic member had a single-layer structure in which voids were formed between calcium silicate secondary particles, and between the calcium silicate secondary particles and the secondary fibers.

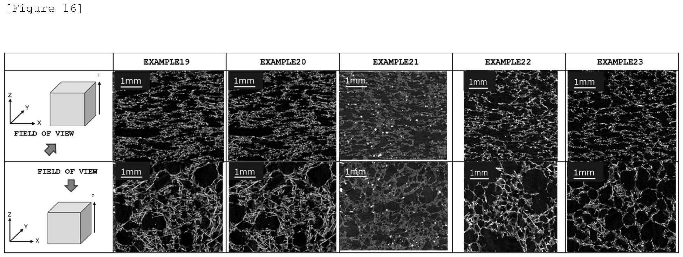

In Figure 16, X-ray CT images of the cross sections of the respective insulating elastic members obtained in Example 19 to Example 22 are shown.

The upper images in Figure 16 are X-ray CT images in the X-Z plane, with the thickness direction of insulating elastic members each being in the Z direction, and the lower images in Figure 16 are X-ray CT images in the X-Y plane, with the thickness direction of insulating elastic members each being in the Z direction.

From the X-ray CT images shown in Figure 16, it can be seen that the insulating elastic members obtained in Example 19 to Example 22 of the present invention have a porous form with a plurality of black voids formed between calcium silicate secondary particles (heat-resistant secondary particles) or between calcium silicate secondary particles (heat-resistant secondary particles) and the secondary fibers, and due to having such a porous morphology, excellent insulating properties and elasticity can be easily exhibited.

The X-ray CT images were obtained on a sample cut into a 10 mm square, by the following method.

Measuring device: SkyScan 1272 manufactured by Bruker
X-ray output: 60 kV 166 mA
Step angle: 0.2 deg
Al filter: 0.25 mm
Resolution: 5 mm

For the resulting insulating elastic members, the moldability (dewaterability (filterability), drying shrinkage, and handling properties), porosity, bulk density and heat resistance were calculated or evaluated in the same manner as in Example 1 to Example 18. Also, the compression recovery rate and CaO content were measured by the following methods. The results are shown in Table 3 and Table 4.

<Compression recovery test>

The compression recovery rate of the resulting insulating elastic member was calculated by the following evaluation method using Autograph AGX-100kNV manufactured by Shimadzu Corporation. The details will be given below, by way of Example 19 as an example as necessary.

1. Compression recovery test (first cycle)

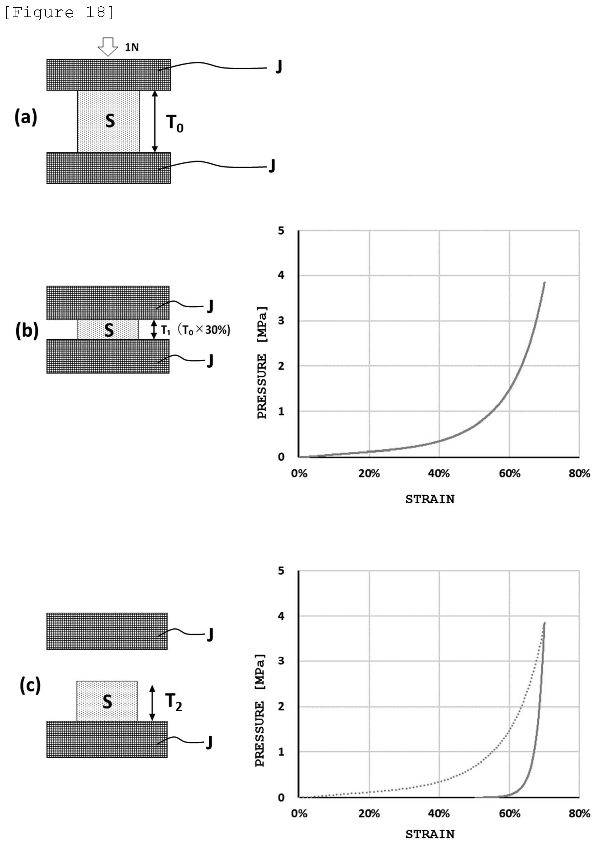

(1) As shown in Figure 18(a), a sample S cut to a size of 20 mm in length and 20 mm in width was disposed between compression jigs J and J, and compressed at a rate of 0.5 mm/min to remove minute irregularities in the sample S. The thickness at the time when a load of 1 N was applied was defined as the natural thickness $T_0$ of the sample.
(2) As shown in the stress-strain curve illustrated on the right side of Figure 18(b), the sample having a natural thickness $T_0$ was compressed at a compression rate of 1.0 mm/min until the strain reached 70% of $T_0$ (until the sample thickness reached $T_0 \times 0.30$). The thickness of the sample obtained at this time was defined as $T_1 (T_0 \times 0.30)$.
(3) Immediately after compressing the sample to 70%, the load was removed at a rate of 1.0 mm/min until the surface pressure reached 0 MPa, as shown in the stress-strain curve illustrated on the right side of Figure 18(c). When the surface pressure reached 0 MPa, the strain was measured, and the thickness of the sample at that time was defined as $T_2$.

On this occasion, the compression recovery rate in the first cycle is calculated by the following formula.

$$\text{Compression recovery rate (first cycle)}=\{(T_2-T_1)/(T_0-T_1)\}\times 100$$

In Example 19, the strain of the sample when the surface pressure reached 0 MPa was 53% (the thickness $T_2$ of the sample was $T_0\times0.47$), so that the compression recovery rate in the first cycle is calculated by the following formula.

$$\text{Compression recovery rate (first cycle)}=\{(T_2-T_1)/(T_0-T_1)\}\times 100=\{(T_0\times0.47-T_0\times0.30)/(T_0-T_0\times0.30)\}\times 100=\{(T_0\times0.17)/(T_0\times0.70)\}\times 100=24\ (\%)$$

2. Compression recovery test (second cycle)

Since it is known that the compression recovery property is generally different between the first cycle and second cycle, the second cycle compression recovery test was performed on the sample obtained in the above item 1. (3), from which the load had been removed until the surface pressure reached to 0 MPa.

(1) 5 minutes after completion of the first cycle of the test, the thickness $T_2'$ of the sample was measured as the initial thickness.

Since the recovery rate of the sample may be slower than the unloading rate (1.0 mm/min) in the item 1. (3) described above in some cases, the thickness $T_2$ of the sample at the end of the first cycle does not necessarily coincide with the initial thickness $T_2'$.

In fact, in Example 19, the initial thickness $T_2'$ ($T_0\times0.58$) was different from $T_2$ ($T_0\times0.47$).

On this occasion, the compression ratio of the sample is calculated by the following formula.

$$\text{Compression ratio}=\{(T_2'-T_1)/T_2'\}\times 100=\{(T_0\times0.58-T_0\times0.30)/T_0\times0.58\}\times 100=48\ (\%)$$

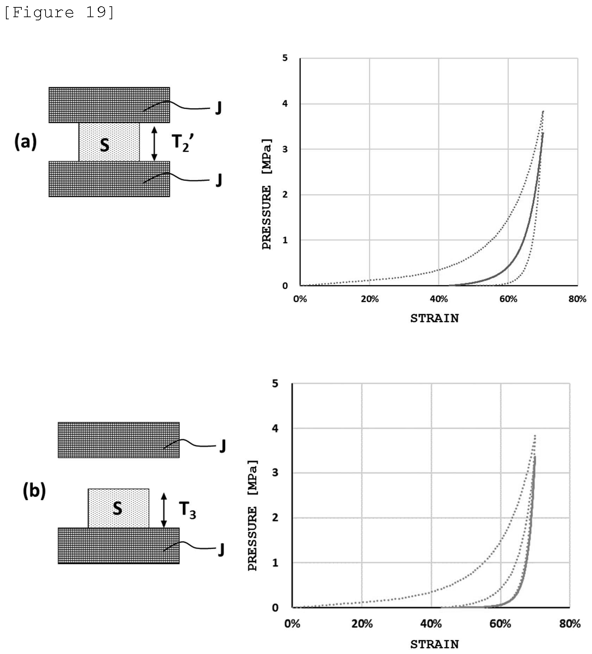

(48% compression, see the stress-strain curve shown on the right side of Figure 19(a))

(2) The sample having the initial thickness $T_2'$ was compressed at a compression rate of 1.0 mm/min until the strain reached 70% of $T_0$ (until the sample thickness reached $T_0\times0.30$).

(3) Immediately after compressing the sample to 70%, the load was removed at a rate of 1.0 mm/min until the surface pressure reached 0 MPa, as shown in the stress-strain curve illustrated on the right side of Figure 19(b). The strain at the point when the surface pressure reached 0 MPa was measured, and the thickness of the sample at this time was defined as $T_3$.

On this occasion, the compression recovery rate in the second cycle is calculated by the following formula.

$$\text{Compression recovery rate (second cycle)}=\{(T_3-T_1)/(T_2'-T_1)\}\times 100$$

In Example 19, since the strain of the sample when the surface pressure reached 0 MPa was 50% (the thickness $T_3$ of the sample was $T_0\times0.50$), the compression recovery rate in the second cycle was calculated by the following formula.

$$\text{Compression recovery rate (second cycle)}=\{(T_3-T_1)/(T_2'-T_1)\}\times 100=\{(T_0\times0.50-T_0\times0.30)/(T_0\times0.58-T_0´0.30)\}´100=\{(T_0´0.20)/(T_0´0.28)\}´100=72\ (\%)$$

As the results of the same compression recovery test performed on the insulating elastic member obtained in Example 20, the compression recovery rate (first cycle) was 30% and the compression recovery rate (second cycle) was 69%.

(Component analysis)

Each of the insulating members obtained in Examples 19 and 20 were subjected to XRF measurements for the inorganic components therein, using a wavelength dispersive X-ray fluorescence spectrometer ZSX Primus II manufactured by Rigaku Corporation.

The content of each inorganic component is shown as the content of each inorganic component in terms of an oxide, based on the total metal components in terms of oxides. The results are shown in Table 4.

(Example 23 (Production example according to "Production mode example (6)"))

In Example 23, an insulating elastic member was prepared by mixing the components so as to achieve the respective contents (mass%) shown in Table 3 in the resulting insulating elastic member, according to the production flow of "Production mode example (6)" shown in Figure 11.

(1) First, wet silica particles and ethanol were mixed so that the total solid concentration was 7 mass%, and the mixture was stirred at 500 rpm for 10 minutes with a tabletop stirrer to obtain a wet silica dispersion.

On the other hand, a silane coupling agent having an organic bonding group and a hydroxyl group (silanol group) on the surface was weighed out in an amount of 18 parts by mass per 100 parts by mass of the wet silica particles, and ethanol and water were added thereto such that the total solid concentration was adjusted to 2 mass%. The mixture was stirred with a tabletop stirrer at 500 rpm for 5 minutes to obtain a dispersion of the silane coupling agent.

The dispersion of the wet silica and the dispersion of the silane coupling agent were mixed such that the concentration of the wet silica was 2 mass%, and the mixture was stirred with a tabletop stirrer at 500 rpm for 60 minutes to obtain a dispersion of silica particles having organic bonding groups on the surface, which was then dried in a dryer at 80°C for 24 hours and then heated in a heating furnace at 150°C for 1 hour to obtain a solid product. The solid product was then pulverized to obtain a powder of silica particles having organic bonding groups on the surface.

(2) The powder of silica particles having organic bonding groups on the surface obtained by the operation (1) and reinforcing fibers weighed out so as to achieve the content shown in Table 3 were added to water such that the total solid concentration was adjusted to 5 mass%. The mixture was stirred for 3 minutes with a mixer/juicer to obtain an aqueous dispersion containing silica particles having organic bonding groups on the surface and reinforcing fibers.

Next, while stirring the aqueous dispersion containing the powder of silica particles having organic bonding groups on the surface and reinforcing fibers obtained in the above-described manner at 1000 rpm with a tabletop stirrer, the acrylic resin 2 as organic elastic particles weighed out so as to achieve the content shown in Table 2 was added to the aqueous dispersion, and the mixture was stirred for 15 minutes using the tabletop stirrer.

(3) Following the operation (2), an anionic polymer flocculant was added in an amount of 1 part by mass per 100 parts by mass in total of the silica particles having organic bonding groups, the reinforcing fibers, and the organic elastic particles. As a result, an aqueous dispersion with an aggregate (flocs) generated and floated near the liquid level was obtained.

(4) The aqueous dispersion containing the aggregate (flocs) obtained in the operation (3) was discharged into a formwork having a wire mesh bottom, and was allowed to stand for 2 minutes to perform dehydration by gravity.

(5) Each of the aggregate (flocs) obtained in the operation (4) was dried at 80°C for 600 minutes to obtain the intended insulating elastic member.

X-ray CT images of the cross sections of the insulating elastic member obtained in Example 23 (obtained in the same manner as in Examples 19 to 22) are shown in Figure 16.

The upper image in Figure 16 is an X-ray CT image in the X-Z plane with the thickness direction of the resulting insulating elastic member being in the Z direction, and the lower image in Figure 16 is an X-ray CT image in the X-Y plane with the thickness direction of the resulting insulating elastic member being in the Z direction.

From the X-ray CT images shown in Figure 16, it can be seen that the insulating elastic member obtained in Example 23 of the present invention has a porous form with a plurality of black voids formed between a plurality of heat-resistant secondary particles or between the heat-resistant secondary particles and secondary fibers, and due to having such a porous morphology, excellent insulating properties and elasticity can easily exhibited.

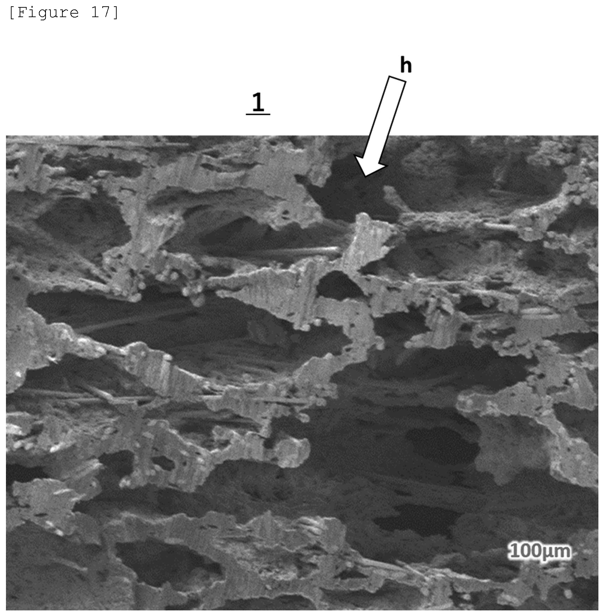

A scanning electron microscope (SEM) image of a cross section of the insulating elastic member obtained in Example 23 is shown in Figure 17.

As can be seen from Figure 17, the insulating elastic member 1 obtained in Example 23 includes an aggregate including a plurality of heat-resistant secondary particles including organic elastic particles attached to the surface of silica particle, and a plurality of secondary fibers including organic elastic particles attached to the surface of reinforcing fiber. It can also be found that voids are formed between the heat-resistant secondary particles having organic elastic particles attached to the surface of the silica particle as heat-resistant silica particle, and a plurality of black voids h (indicated by an outlined arrow in the drawing) are formed between the heat-resistant secondary fibers having organic elastic particles attached to the surface of the reinforcing fiber and the heat-resistant secondary particles/fibers. Also, it has been confirmed that the insulating elastic member 1 has a single-layer structure.

As shown in Figure 16 and Figure 17, the insulating elastic member obtained in Example 23 has a porous form with a plurality of voids formed therein, and therefore can easily exhibit excellent insulating properties and elasticity.

For the resulting insulating elastic members, the moldability (dewaterability (filterability), drying shrinkage, and handling properties), porosity, bulk density and heat resistance were calculated or evaluated in the same manner as in Example 1 to Example 18. Also, the compression recovery rate was measured by the same methods as in Example 19 and

Example 20.

The results are shown in Table 3 and Table 4.

[Table 3]

| | | Example 19 | Example 20 | Example 21 | Example 22 | Example 23 |
|---|---|---|---|---|---|---|
| Calcium silicate particles (mass%) | Xonotlite | 0 | 0 | 0 | 0 | 0 |
| | Wet silica coated with C-S-H gel | 40 | 25 | 40 | 25 | 0 |
| Silica particle having organic bonding group on surface (mass%) | | 0 | 0 | 0 | 0 | 25 |
| Silane coupling agent (part by mass) | | 0 | 0 | 0 | 0 | 18 |
| Organic elastic particles (mass%) | Acrylic resin 1 | 0 | 0 | 0 | 0 | 0 |
| | Acrylic resin 2 | 50 | 50 | 50 | 50 | 50 |
| Reinforcing fibers (mass%) | Glass fiber 2 | 10 | 25 | 0 | 5 | 5 |
| | Glass fiber 3 | 0 | 0 | 0 | 20 | 20 |
| | Rock wool | 0 | 0 | 10 | 0 | 0 |
| Cationic polymer flocculant (part by mass) | | 1 | 1 | 1 | 1 | 0 |
| Anionic polymer flocculant (part by mass) | | 0 | 0 | 0 | 0 | 1 |
| Moldability | Dewaterability | ○ | ○ | ○ | ○ | ○ |
| | Drying shrinkage | ○ | ○ | ○ | ○ | ○ |
| | Handling property | ○ | ○ | ○ | ○ | ○ |
| Bulk density [kg/m$^3$] | | 219 | 270 | 301 | 279 | 253 |
| Porosity [%] | | 87 | 85 | 83 | 82 | 84 |
| Heat resist ance | Mass loss rate [mass%] | 49 | 49 | 53 | - | - |
| | Volume shrinkage rate [vol%] | 0 | 0 | 1 | - | - |
| | Handling property | ○ | ○ | ○ | - | - |
| Thermal conductivity (W/mk) | | 0.0370 | - | - | - | - |

[Table 4]

| | | Example 19 | Example 20 | Example 21 | Example 22 | Example 23 |
|---|---|---|---|---|---|---|
| First cycle | Compression ratio [%] | 70 | 70 | - | - | 70 |
| | Compression recovery rate [%] | 24 | 30 | - | - | 82 |
| Second cycle | Compression ratio [%] | 48 | 55 | - | - | 67 |
| | Compression recovery rate [%] | 72 | 69 | - | - | 92 |

(continued)

| | | Example 19 | Example 20 | Example 21 | Example 22 | Example 23 |
|---|---|---|---|---|---|---|
| XRF measurement result [mass%] | MgO | 0.2 | 0.6 | - | - | - |
| | $Al_2O_3$ | 1.3 | 3.1 | - | - | - |
| | $SiO_2$ | 92.5 | 81.5 | - | - | - |
| | $SO_3$ | 0.5 | 0.6 | - | - | - |
| | $K_2O$ | 0.1 | 0.3 | - | - | - |
| | CaO | 5.3 | 13.6 | - | - | - |
| | $Fe_2O_3$ | 0.2 | 0.4 | - | - | - |
| | SrO | 0.0 | 0.0 | - | - | - |
| | $ZrO_2$ | 0.0 | 0.0 | - | - | - |

(Comparative Example 1 to Comparative Example 2 (Production example according to "Production mode example (1)"))

In Comparative Example 1 to Comparative Example 2, an insulating elastic member was prepared by mixing the components so as to achieve the respective contents (mass%) shown in Table 5 in the resulting insulating elastic member, according to the production flow of "Production mode example (1)" shown in Figure 8.

(1) First, the components as calcium silicate particles, reinforcing fibers, and organic elastic particles were weighed out so as to achieve the respective contents shown in Table 5, and water was added thereto to adjust the total solid concentration to 5 mass%. The mixture was stirred for 3 minutes in a mixer/juicer to obtain an aqueous dispersion containing calcium silicate particles, reinforcing fibers, and organic elastic particles.
(2) To the aqueous dispersion containing calcium silicate particles, reinforcing fibers and organic elastic particles obtained by the operation (1), a cationic polymer flocculant was added in an amount of 1 part by mass per 100 parts by mass of the calcium silicate particles, organic elastic particles and reinforcing fibers in total. As a result, an aqueous dispersion with an aggregate (flocs) generated and floated near the liquid level was obtained.
(3) The aqueous dispersion containing the aggregate (flocs) obtained in the operation (2) was introduced into a frame-type papermaking machine to be dehydrated and molded through a papermaking process.
(4) The dehydrated molded product obtained in the operation (3) was dried at 80°C for 600 minutes to obtain an insulating elastic members.

By checking scanning electron microscope (SEM) images of the cross sections of the insulating elastic members obtained in Comparative Example 1 to Comparative Example 2, it was confirmed that no void was formed between calcium silicate secondary particles or between the calcium silicate secondary particle and the secondary fiber.
For the resulting insulating elastic members each, the moldability (dewaterability (filterability), drying shrinkage, and handling properties) was evaluated in the same manner as in Example 1 to Example 11. The results are shown in Table 5.

(Comparative Example 3 (Production example according to "Production mode example (1)"))

In Comparative Example 3, an insulating elastic member was prepared by mixing the components so as to achieve the respective contents (mass%) shown in Table 5 in the resulting insulating elastic member, according to the production flow of "Production mode example (1)" shown in Figure 8.

(1) First, the components aswet silica particles, reinforcing fibers and organic elastic particles as components weighed out so as to achieve the respective contents shown in Table 5 and water were added thereto to adjust the total solid concentration to 5 mass%, and the mixture was stirred for 3 minutes with a mixer/juicer to obtain an aqueous dispersion containing wet silica particles, reinforcing fibers and organic elastic particles.
(2) To the aqueous dispersion containing wet silica particles, reinforcing fibers and organic elastic particles obtained by the operation (1), a flocculant was added in an amount of 1 part by mass per 100 parts by mass of the wet silica particles, organic elastic particles and reinforcing fibers in total. As a result, an aqueous dispersion with an aggregate

(flocs) generated and precipitated at the bottom was obtained.

(3) The aqueous dispersion containing the aggregate (flocs) obtained in the operation (2) was introduced into a frame-type papermaking machine to be dehydrated and molded through a papermaking process.

(4) The sheet product obtained in the operation (3) was dried at 80°C for 600 minutes to obtain an insulating elastic member.

By checking scanning electron microscope (SEM) image of the cross section of the insulating elastic member obtained in Comparative Example 3, it was confirmed that no void was formed between calcium silicate secondary particles or between the calcium silicate secondary particle and the secondary fiber.

For the resulting insulating elastic members each, the moldability (dewaterability (filterability), drying shrinkage, and handling properties) was evaluated in the same manner as in Example 1 to Example 11. The results are shown in Table 5.

(Comparative Example 4 to Comparative Example 7 (Production example according to "Production mode example (2)"))

In Comparative Example 4 to Comparative Example 7, an insulating elastic member was prepared by mixing the components so as to achieve the respective contents (mass%) shown in Table 5 in the resulting insulating elastic member, according to the production flow of "Production mode example (2)" shown in Figure 8.

(1) First, the components as calcium silicate particles, reinforcing fibers and organic elastic particles were weighed out so as to achieve the respective contents shown in Table 5, and water was added thereto to adjust the total solid concentration to 5 mass%, and the mixture was stirred for 3 minutes with a mixer/juicer to obtain an aqueous dispersion containing calcium silicate particles, reinforcing fibers and organic elastic particles.

(2) To the aqueous dispersion containing calcium silicate particles, reinforcing fibers and organic elastic particles obtained by the operation (1), a flocculant was added in an amount of 1 part by mass per 100 parts by mass of the calcium silicate particles, organic elastic particles and reinforcing fibers in total. As a result, an aqueous dispersion with an aggregate (flocs) generated and floated near the liquid level was obtained.

(3) The aqueous dispersion containing the aggregate (flocs) obtained in the operation (2) was introduced into a dehydration press machine to be subjected to dehydration pressing and molding at a surface pressure of 0.8 MPa for 20 seconds.

(4) The dehydrated molded product obtained in the operation (3) was dried at 80°C for 600 minutes to obtain insulating elastic members each.

By checking scanning electron microscope (SEM) images of the cross sections of the insulating elastic members each obtained in Comparative Example 4 to Comparative Example 7, it was confirmed that no void was formed between calcium silicate secondary particles or between the calcium silicate secondary particle and the secondary fiber.

For the resulting insulating elastic members each, the moldability (dewaterability (filterability), drying shrinkage, and handling properties) was evaluated in the same manner as in Example 1 to Example 11, and the porosity and bulk density were also measured.

Further, for the insulating elastic member obtained in Comparative Example 7, the thermal conductivity was measured by the same method as in Example 7.

The results are shown in Table 5.

[Table 5]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Calcium silicate particles (mass%) | C-S-H gel | 57 | 54 | 0 | 50 | 40 | 30 | 50 |
| | Xonotlite | 0 | 0 | 0 | 0 | 0 | 0 | 0 |
| | Wet silica coated with C-S-H gel | 0 | 0 | 0 | 0 | 0 | 0 | 0 |
| Wet silica (mass%) | | 0 | 0 | 57 | 0 | 0 | 0 | 0 |
| Organic elastic particles (mass%) | NBR | 40 | 40 | 40 | 47 | 57 | 67 | 40 |
| | Silicone resin | 0 | 0 | 0 | 0 | 0 | 0 | 0 |
| | Acrylic resin 1 | 0 | 0 | 0 | 0 | 0 | 0 | 0 |
| | Acrylic resin 2 | 0 | 0 | 0 | 0 | 0 | 0 | 0 |
| Reinforcing fibers (mass%) | Glass fiber 1 | 3 | 6 | 3 | 3 | 3 | 3 | 10 |
| | Rock wool | 0 | 0 | 0 | 0 | 0 | 0 | 0 |
| | Kraft pulp | 0 | 0 | 0 | 0 | 0 | 0 | 0 |
| Cationic polymer flocculant (part by mass) | | 1 | 1 | 1 | 1 | 1 | 1 | 1 |
| Moldability | Dewaterability | ○ | ○ | × | ○ | ○ | ○ | ○ |
| | Drying shrinkage | ×: cracks | ×: cracks | ×: cracks | ×: cracks and warpage | ×: cracks and warpage | ×: cracks and warpage | ○ |
| | Handling property | ×: brittle | ×: brittle | ×: brittle | ○ | ○ | ○ | ○ |
| Bulk density [kg/m$^3$] | | - | - | - | 463 | 518 | 559 | 566 |
| Porosity [%] | | - | - | - | 75 | 70 | 66 | 70 |
| Thermal conductivity (W/mk) | | - | - | - | - | - | - | 0.0980 |

The insulating elastic members obtained by the specified production method in Example 1 to Example 23 include an aggregate of a plurality of heat-resistant secondary particles including organic elastic particles attached to the surface of a heat-resistant particle and a plurality of secondary fibers including organic elastic particles attached to the surface of a reinforcing fiber, wherein many voids are formed between the heat-resistant secondary particles and between the heat-resistant secondary particles and the secondary fibers and the member has a single-layer structure with.

As is clear from the results in Table 1 to Table 4, the insulating elastic members obtained in Example 1 to Example 23 have a single-layer structure that can be easily produced, and due to having an extremely porous structure (high porosity and low bulk density), the member can exhibit excellent insulating properties and elasticity.

On the other hand, in Comparative Example 1 to Comparative Example 7, the heat-resistant particles, organic elastic particles, and reinforcing fibers are mixed and stirred in water all at once in production of the insulating elastic member, and this results in uneven distribution of the components in water, making it difficult for the organic elastic particles to adhere to the surfaces of the heat-resistant particles and reinforcing fibers.

Further, in Comparative Example 1 to Comparative Example 7, an aqueous dispersion containing heat-resistant particles, organic elastic particles, and reinforcing fibers is dehydrated and molded using a frame-type papermaking machine or dehydrated and press-molded in production of the insulating elastic member. Accordingly, in these Comparative Examples, the dewaterability (filterability) tends to be low, and/or the product tends to shrink after drying, causing cracks or warpage.

Therefore, from Table 4, it can be seen that the insulating elastic members obtained in Comparative Example 1 to Comparative Example 7 had difficulty in production due to poor handling properties of the aggregate (solid content) obtained by dehydrating the aqueous dispersion during production (Comparative Example 1 to Comparative Example 3), or had poor drying shrinkage (Comparative Example 1 to Comparative Example 6), and that these insulating elastic members are thus impractical.

Furthermore, from Table 5, it can be seen that the insulating elastic members obtained in Comparative Example 1 to Comparative Example 7 have no void between a plurality of heat-resistant secondary particles or between heat-resistant secondary particles and secondary fibers, and thus have low porosity (Comparative Example 6), high bulk density (Comparative Example 4 to Comparative Example 7), or high thermal conductivity (Comparative Example 7), and that these insulating elastic members are inferior in insulating properties and elasticity.

[Industrial Applicability]

According to the present invention, provided is an insulating elastic member having a single-layer structure to exhibit excellent insulation and elasticity, which contains an insulating material and elastic material in respective predetermined amounts, and can be produced at a high productivity; and also provided is a method for producing the insulating elastic member easily. Further, a secondary battery can be provided in which heat conduction to adjacent secondary battery cells and damage to secondary battery cells can be effectively suppressed, .

[Reference Signs List]

1: Insulating elastic member
2: Calcium silicate particle
3: Organic elastic particle
3A: Organic elastic particle layer
3B: Organic elastic particle layer
4: Reinforcing fiber
5: Calcium silicate secondary particle
6: Secondary fiber
7: Hydrophilic group
10: Secondary battery cell
22: Rubber sheet
23: Insulating sheet
h: Void
J: Compression jig
S: Sample

## Claims

**1.** An insulating elastic member comprising:

15 to 75 mass% of heat-resistant particles and 15 to 75 mass% in total of one or more organic elastic particles selected from rubber particles and resin particles,
the member having a porosity of 70 to 95% and a bulk density of 80 to 400 kg/m$^3$, and
the member having a single-layer structure.

**2.** The insulating elastic member according to claim 1,
having a content of calcium components of more than 0 mass% based on the total metal components, in terms of oxides, as measured by an X-ray fluorescent spectrometer.

**3.** The insulating elastic member according to claim 1,
having a content of calcium components of 60 mass% or less based on the total metal components, in terms of oxides, as measured by an X-ray fluorescent spectrometer.

**4.** The insulating elastic member according to claim 1,
comprising an aggregate of a plurality of heat-resistant secondary particles including the organic elastic particles attached to the surface of the heat-resistant particle, wherein voids are formed between the heat-resistant secondary particles.

**5.** An insulating elastic member comprising:

15 to 75 mass% of heat-resistant particles and 15 to 75 mass% in total of one or more organic elastic particles selected from rubber particles and resin particles,
comprising an aggregate of a plurality of heat-resistant secondary particles including the organic elastic particles attached to the surface of the heat-resistant particle, wherein voids are formed between the heat-resistant secondary particles, and
the member having a single-layer structure.

**6.** The insulating elastic member according to claim 1 or claim 5,
wherein the heat-resistant particles are calcium silicate particles or silica particles.

**7.** The insulating elastic member according to claim 1 or claim 5, further comprising:
3 to 40 mass% in total of one or more reinforcing fibers selected from inorganic fibers and organic fibers.

**8.** The insulating elastic member according to claim 7, comprising:

an aggregate of heat-resistant secondary particles and secondary fibers, wherein the heat-resistant secondary particles include the organic elastic particles attached to the surface of the heat-resistant particle, and the secondary fibers include the organic elastic particles attached to the surface of the reinforcing fiber, and
wherein voids are formed between the heat-resistant secondary particles and the secondary fibers.

**9.** The insulating elastic member according to claim 1 or claim 5, further comprising 5 to 50 mass% of functional particles.

**10.** The insulating elastic member according to claim 1 or claim 5, further comprising more than 0 mass% and 3 mass% or less of a flocculant.

**11.** The insulating elastic member according to claim 1 or claim 5, wherein the insulating elastic member is disposed between adjacent secondary battery cells.

**12.** A method for producing the insulating elastic member according to claim 1 or claim 5, comprising:

mixing an aqueous dispersion containing heat-resistant particles with one or more organic elastic particles selected from rubber particles and resin particles, and then
dehydrating the mixture by gravity or suction.

**13.** The method according to claim 12, wherein the heat-resistant particles are calcium silicate particles.

**14.** The method according to claim 12, comprising:
mixing an aqueous dispersion containing heat-resistant particles with one or more organic elastic particles selected from rubber particles and resin particles,
further mixing a resultant with a flocculant, and then dehydrating the mixture by gravity or suction.

**15.** The method according to claim 12, comprising:

mixing an aqueous dispersion containing heat-resistant particles and one or more reinforcing fibers selected from inorganic fibers and organic fibers with one or more organic elastic particles selected from rubber particles and resin particles, and then
dehydrating the mixture by gravity or suction.

**16.** The method according to claim 12, comprising:

mixing an aqueous dispersion containing heat-resistant particles and one or more reinforcing fibers selected from inorganic fibers and organic fibers with one or more organic elastic particles selected from rubber particles and resin particles,
further mixing a resultant with a flocculant, and then
dehydrating the mixture by gravity or suction.

**17.** The method according to claim 12, further comprising:

mixing an aqueous dispersion containing heat-resistant particles, one or more reinforcing fibers selected from inorganic fibers and organic fibers, and functional particles, with one or more organic elastic particles selected from rubber particles and resin particles, and then
dehydrating the mixture by gravity or suction.

**18.** The method according to claim 12, further comprising:

mixing an aqueous dispersion containing heat-resistant particles, one or more reinforcing fibers selected from inorganic fibers and organic fibers, and functional particles, with one or more organic elastic particles selected from rubber particles and resin particles,
further mixing a resultant with a flocculant, and then
dehydrating the mixture by gravity or suction.

**19.** A secondary battery comprising the insulating elastic member according to claim 1 or claim 5 disposed between adjacent secondary battery cells.

[Figure 1]

1
h
3 B
6
3
4
h
3 A
3
5
2

[Figure 2]

1
h
1 mm

[Figure 3]

h
1
100μm

[Figure 4]

3

1μm

5

2

[Figure 5]

3
6
4
10μm JEOL 2023/09/01
X 1,000 1.00kV SEI GB_HIGH WD 8.1mm 14:02:15

[Figure 6]

2
O
O
Si
O-
Ca+
7
3

[Figure 7]

2
3
R
SO3-
Ca+
O
Si
O
O

[Figure 8]

(1)
CALCIUM SILICATE PARTICLES
ORGANIC ELASTIC PARTICLES
REINFORCING FIBERS
WATER
STIRRING
FLOCCULANT
FRAME-TYPE PAPERMAKING MACHINE
DRYING
(2)
CALCIUM SILICATE PARTICLES
ORGANIC ELASTIC PARTICLES
REINFORCING FIBERS
WATER
STIRRING
FLOCCULANT
DEHYDRATION PRESSING
DRYING

[Figure 9]

(3)

CALCIUM SILICATE PARTICLES
REINFORCING FIBERS
WATER
STIRRING
STIRRING
ORGANIC ELASTIC PARTICLES
STIRRING
WATER
FLOCCULANT
DEHYDRATING BY GRAVITY
DRYING

(4)

CALCIUM SILICATE PARTICLES
REINFORCING FIBERS
WATER
STIRRING
STIRRING
ORGANIC ELASTIC PARTICLES
STIRRING
WATER
DEHYDRATING BY GRAVITY
DRYING

[Figure 10]

(5) −1
CALCIUM SILICATE PARTICLES
REINFORCING FIBERS
WATER
SATURATED SOLUTION OF HYDRATED LIME
STIRRING
STIRRING
ORGANIC ELASTIC PARTICLES
STIRRING
FLOCCULANT
DEHYDRATING BY GRAVITY
DRYING
(5) −2
WET SILICA
REINFORCING FIBERS
WATER
SATURATED SOLUTION OF HYDRATED LIME
STIRRING
STIRRING
ORGANIC ELASTIC PARTICLES
STIRRING
FLOCCULANT
DEHYDRATING BY GRAVITY
DRYING

[Figure 11]

(6)
WET SILICA
ETHANOL
ETHANOL
WATER
SILANE COUPLING AGENT
STIRRING
STIRRING
STIRRING
DRYING
HEATING
PULVERIZING
REINFORCING FIBERS
WATER
STIRRING
STIRRING
ORGANIC ELASTIC PARTICLES
STIRRING
FLOCCULANT
DEHYDRATING BY GRAVITY
DRYING

[Figure 12]

5
2
3
10µm JEOL 2023/07/31
X 2,300 10.0kV SEI SEM WD 5.8mm 16:53:17

[Figure 13]

10μm
6
3
4

[Figure 14]

3
2
5
10μm JEOL 2023/08/29
X 1,700 1.00kV SEI GB_HIGH WD 7.5mm 16:28:48

[Figure 15]

6
4
3
10µm JEOL 2023/08/29
X 1,300 1.00kV SEI GB_HIGH WD 9.5mm 17:07:49

[Figure 16]

EXAMPLE19
EXAMPLE20
EXAMPLE21
EXAMPLE22
EXAMPLE23
FIELD OF VIEW
FIELD OF VIEW
Z
Y
X
1mm

[Figure 17]

h
1
100µm

[Figure 18]

1N
J
(a)
S
$T_0$
J

J
(b)
S
$T_1$ ($T_0$×30%)
J
PRESSURE [MPa]
5
4
3
2
1
0
0%
20%
40%
60%
80%
STRAIN

J
(c)
S
$T_2$
J

PRESSURE [MPa]
5
4
3
2
1
0
0%
20%
40%
60%
80%
STRAIN

[Figure 19]

(a)
J
S
$T_2'$
J

PRESSURE [MPa]
STRAIN
0
1
2
3
4
5
0%
20%
40%
60%
80%

(b)
J
S
$T_3$
J
PRESSURE [MPa]
STRAIN
0
1
2
3
4
5
0%
20%
40%
60%
80%

[Figure 20]

10
10
23
22
23

## INTERNATIONAL SEARCH REPORT

International application No. **PCT/JP2024/036341**

### A. CLASSIFICATION OF SUBJECT MATTER

***C08J 9/28***(2006.01)i; ***F16L 59/00***(2006.01)i; ***H01M 10/658***(2014.01)i
FI: C08J9/28 102; H01M10/658; F16L59/00

According to International Patent Classification (IPC) or to both national classification and IPC

### B. FIELDS SEARCHED

Minimum documentation searched (classification system followed by classification symbols)

C08J9/00-9/42; F16L59/00; H01M10/658

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/170534 A1 (HITACHI CHEMICAL COMPANY, LTD.) 05 October 2017 (2017-10-05) claims, paragraphs [0021], [0026], [0032], [0036], [0041]-[0043], [0059]-[0060], [0149], [0157]-[0159], example 11, tables 1-3 | 1, 4-6, 9 |
| A | | 2-3, 7-8, 10-19 |
| A | WO 2023/127904 A1 (IBIDEN CO., LTD.) 06 July 2023 (2023-07-06) claims, paragraphs [0023]-[0026], [0035], [0037], [0082]-[0085], fig. 1, 2 | 1-19 |
| A | WO 2023/120545 A1 (IBIDEN CO., LTD.) 29 June 2023 (2023-06-29) claims, paragraphs [0008], [0034]-[0038], [0097], [0103]-[0106], fig. 1, 2 | 1-19 |
| A | JP 2020-119841 A (IBIDEN CO., LTD.) 06 August 2020 (2020-08-06) claims, paragraphs [0026]-[0029], [0033], [0051]-[0052], [0056], [0068], [0074]-[0076] | 1-19 |
| A | JP 10-203856 A (ASAHI CHEMICAL INDUSTRY CO., LTD.) 04 August 1998 (1998-08-04) claims, paragraphs [0024]-[0025], table 1 | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 December 2024** | **07 January 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

**INTERNATIONAL SEARCH REPORT**

International application No.
**PCT/JP2024/036341**

**C. DOCUMENTS CONSIDERED TO BE RELEVANT**

| Category* | Citation of document, with indication, where appropriate, of the relevant passages | Relevant to claim No. |
|---|---|---|
| A | JP 8-198657 A (JAPAN SYNTHETIC RUBBER CO., LTD.) 06 August 1996 (1996-08-06) claims, paragraphs [0001], [0010]-[0013], [0030] | 1–19 |

Form PCT/ISA/210 (second sheet) (July 2022)

**INTERNATIONAL SEARCH REPORT**
**Information on patent family members**

International application No.
**PCT/JP2024/036341**

| Patent document cited in search report | Publication date (day/month/year) | Patent family member(s) | Publication date (day/month/year) |
|---|---|---|---|
| WO 2017/170534 A1 | 05 October 2017 | US 2019/0119494 A1 claims, paragraphs [0022], [0029], [0039], [0044]-[0046], [0072]-[0073], [0175], [0184]-[0186], example 11, tables 1-3 | |
| | | CN 108883943 A | |
| | | KR 10-2018-0132723 A | |
| | | CN 114181533 A | |
| | | KR 10-2022-0162818 A | |
| | | TW 201806863 A | |
| | | TW 202241811 A | |
| WO 2023/127904 A1 | 06 July 2023 | CN 118402120 A | |
| WO 2023/120545 A1 | 29 June 2023 | CN 219066973 U | |
| | | CN 116365113 A | |
| JP 2020-119841 A | 06 August 2020 | (Family: none) | |
| JP 10-203856 A | 04 August 1998 | (Family: none) | |
| JP 8-198657 A | 06 August 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021099940 A